(19) Europäisches Patentamt
European Patent Office
Office européen des brevets

(11) **EP 4 454 389 B1**

(12) **EUROPEAN PATENT SPECIFICATION**

(45) Date of publication and mention
of the grant of the patent:
**04.02.2026 Bulletin 2026/06**

(21) Application number: **23756650.0**

(22) Date of filing: **16.02.2023**

(51) International Patent Classification (IPC):
*H04L 1/00* (2006.01)      *H04L 1/08* (2006.01)
*H04L 1/1607* (2023.01)    *H04L 1/18* (2023.01)
*H04L 1/1829* (2023.01)    *H04L 5/00* (2006.01)
*H04W 72/21* (2023.01)     *H04W 72/12* (2023.01)
*H04W 72/232* (2023.01)    *H04W 72/1268* (2023.01)

(52) Cooperative Patent Classification (CPC):
**H04L 1/1854; H04L 1/0026; H04L 1/0031;
H04L 1/0073; H04L 1/08; H04L 1/1671;
H04L 1/1858; H04W 72/1268;** H04W 72/21;
H04W 72/566

(86) International application number:
**PCT/KR2023/002274**

(87) International publication number:
**WO 2023/158238 (24.08.2023 Gazette 2023/34)**

(54) **APPARATUS AND COMMUNICATION METHOD THEREOF IN WIRELESS COMMUNICATION SYSTEM**

VORRICHTUNG UND KOMMUNIKATIONSVERFAHREN DAFÜR IN EINEM DRAHTLOSKOMMUNIKATIONSSYSTEM

APPAREIL ET PROCÉDÉ DE COMMUNICATION ASSOCIÉ DANS UN SYSTÈME DE COMMUNICATION SANS FIL

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **18.02.2022   CN 202210163339**
**09.05.2022   CN 202210501730**

(43) Date of publication of application:
**30.10.2024 Bulletin 2024/44**

(73) Proprietor: SAMSUNG ELECTRONICS CO., LTD.
**Yeongtong-gu
Suwon-si, Gyeonggi-do 16677 (KR)**

(72) Inventors:
• **ZHANG, Sa
Beijing 100028 (CN)**
• **SUN, Feifei
Beijing 100028 (CN)**

(74) Representative: **Gulde & Partner
Patent- und Rechtsanwaltskanzlei mbB
Berliner Freiheit 2
10785 Berlin (DE)**

(56) References cited:
**WO-A1-2022/000318      US-A1- 2021 258 981**

• **HUAWEI ET AL: "Intra-UE multiplexing enhancements", vol. RAN WG1, no. e-Meeting; 20220221 - 20220303, 14 February 2022 (2022-02-14), XP052114608, Retrieved from the Internet <URL:https://ftp.3gpp.org/tsg_ran/ WG1_RL1/TSGR1_108-e/Docs/R1-2200960.zip R1-2200960 Intra-UE multiplexing enhancements.docx> [retrieved on 20220214]**

**(Cont. next page)**

- **NOKIA ET AL: "On UL intra-UE multiplexing and prioritization enhancements", vol. RAN WG1, no. e-Meeting; 20220221 - 20220303, 11 February 2022 (2022-02-11), XP052107555, Retrieved from the Internet <URL:https://ftp.3gpp.org/tsg_ran/ WG1_RL1/TSGR1_108-e/Docs/R1-2201018.zip R1-2201018_Nokia_Rel-17_IIoT_intra-UE.docx> [retrieved on 20220211]**
- **NOKIA, NOKIA SHANGHAI BELL: "On UL intra-UE multiplexing and prioritization enhancements", 3GPP DRAFT; R1-2201018, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20220221 - 20220303, 11 February 2022 (2022-02-11), Mobile Competence Centre ; 650, route des Lucioles ; F-06921 Sophia-Antipolis Cedex ; France, XP052107555**
- **HUAWEI, HISILICON: "Intra-UE multiplexing enhancements", 3GPP DRAFT; R1-2200960, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20220221 - 20220303, 14 February 2022 (2022-02-14), Mobile Competence Centre ; 650, route des Lucioles ; F-06921 Sophia-Antipolis Cedex ; France, XP052114608**
- **ZTE: "Discussion on enhanced intra-UE multiplexing", 3GPP DRAFT; R1-2201162, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20220221 - 20220303, 14 February 2022 (2022-02-14), Mobile Competence Centre ; 650, route des Lucioles ; F-06921 Sophia-Antipolis Cedex ; France, XP052109225**

**Description**

## TECHNICAL FIELD

The disclosure relates to a field of wireless communication. More particularly, the disclosure relates to an apparatus and a communication method thereof in a wireless communication system.

## BACKGROUND ART

Fifth generation (5G) mobile communication technologies define broad frequency bands such that high transmission rates and new services are possible, and can be implemented not only in "Sub 6 gigahertz (GHz)" bands such as 3.5GHz, but also in "Above 6GHz" bands referred to as millimeter wave (mmWave) including 28GHz and 39GHz. In addition, it has been considered to implement sixth generation (6G) mobile communication technologies (referred to as Beyond 5G systems) in terahertz (THz) bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive multi input multi output (MIMO) for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BandWidth Part (BWP), new channel coding methods such as a Low Density Parity Check (LDPC) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, new radio (NR) user equipment (UE) Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, Integrated Access and Backhaul (IAB) for providing a node for network service area expansion by supporting a wireless backhaul link and an access link in an integrated manner, mobility enhancement including conditional handover and Dual Active Protocol Stack (DAPS) handover, and two-step random access for simplifying random access procedures (2-step random access channel (RACH) for NR). There also has been ongoing standardization in system architecture/-service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and Artificial Intelligence (AI) from the design stage and internalizing end-to-end AI support functions, and next-generation distributed computing technology for implementing services at levels of complexity exceeding the limit of UE operation capability by utilizing ultra-high-performance communication and computing resources.

Recently, there are needs to enhance current procedures of transmission/reception of physical downlink shared channels (PDSCHs) and physical uplink shared channel (PUSCHs).

The above information is presented as background information only to assist with an understanding of the disclosure. No determination has been made, and no assertion is made, as to whether any of the above might be applicable as prior art with regard to the disclosure. HUAWEI ET AL: "Intra-UE multiplexing enhancements", 3GPP DRAFT; R1-2200960, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20220221 - 20220303 14 February 2022 (2022-02-14), provides some intra-UE multiplexing enhancements. NOKIA ET AL: "On UL intra-UE multiplexing and prioritization enhancements", 3GPP DRAFT; R1-2201018, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20220221 - 20220303 11 February 2022 (2022-02-11), provides some UL intra-UE multiplexing and prioritization enhancements.

## DISCLOSURE OF INVENTION

### SOLUTION TO PROBLEM

Aspects of the disclosure are to address at least the above-mentioned problems and/or disadvantages and to provide at least the advantages described below. Accordingly, an aspect of the disclosure is to provide an apparatus and a communication method thereof in a wireless communication system. The invention is set out in the appended set of claims.

Additional aspects will be set forth in part in the description which follows and, in part, will be apparent from the description, or may be learned by practice of the presented embodiments.

In accordance with an aspect of the disclosure, a method according to claim 1 is provided.

In accordance with another aspect of the disclosure, a user equipment according to claim 5 is provided.

The invention is defined by the appended claims. Other aspects, advantages, and salient features of the disclosure will become apparent to those skilled in the art from the following detailed description, which, taken in conjunction with the annexed drawings, discloses various embodiments of the disclosure.

### BRIEF DESCRIPTION OF DRAWINGS

The above and other aspects, features, and advantages of certain embodiments of the disclosure will be more apparent from the following description taken in conjunction with the accompanying drawings, in which:

FIG. 1 illustrates a schematic diagram of an example wireless network according to an embodiment of the disclosure;
FIG. 2A illustrates example wireless transmission and reception paths according to an embodiment of the disclosure;
FIG. 2B illustrates example wireless transmission and reception paths according to an embodiment of the disclosure;
FIG. 3A illustrates an example a user equipment (UE) according to an embodiment of the disclosure;
FIG. 3B illustrates an example gNB according to an embodiment of the disclosure;
FIG. 4 illustrates a block diagram of a second transceiving node according to an embodiment of the disclosure;
FIG. 5 illustrates a flowchart of a method performed by a UE according to an embodiment of the disclosure;
FIG. 6A illustrates some examples of uplink transmission timing according to an embodiment of the disclosure;
FIG. 6B illustrates some examples of uplink transmission timing according to an embodiment of the disclosure;
FIG. 6C illustrates some examples of uplink transmission timing according to an embodiment of the disclosure;
FIG. 7A illustrates examples of time domain resource allocation tables according to an embodiment of the disclosure;
FIG. 7B illustrates examples of time domain resource allocation tables according to an embodiment of the disclosure;
FIG. 8 illustrates a schematic diagram of uplink transmission collision according to an embodiment of the disclosure;
FIG. 9 illustrates a schematic diagram of uplink transmission collision according to an embodiment of the disclosure;
FIG. 10 illustrates a flowchart of a method performed by a terminal according to an embodiment of the disclosure;
FIG. 11 illustrates a block diagram of a first transceiving node according to an embodiment of the disclosure;
FIG. 12 illustrates a flowchart of a method performed by a base station according to an embodiment of the disclosure;
FIG. 13 illustrates a schematic diagram of timing conditions according to an embodiment of the disclosure;
FIG. 14 illustrates a block diagram of a terminal (or a user equipment (UE)) according to an embodiment of the disclosure; and
FIG. 15 illustrates a block diagram of a base station according to an embodiment of the disclosure.

The same reference numerals are used to represent the same elements throughout the drawings.

## BEST MODE FOR CARRYING OUT THE INVENTION

The following description with reference to the accompanying drawings is provided to assist in a comprehensive understanding of various embodiments of the disclosure as defined by the claims. It includes various specific details to assist in that understanding but these are to be regarded as merely exemplary. Accordingly, those of ordinary skill in the art will recognize that various changes and modifications of the various embodiments described herein can be made without departing from the scope of the disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of various embodiments of the disclosure is provided for illustration purpose only and not for the purpose of limiting the disclosure as defined by the appended claims.

It is to be understood that the singular forms "a," "an," and "the" include plural referents unless the context clearly dictates otherwise. Thus, for example, reference to "a component surface" includes reference to one or more of such surfaces.

The term "couple" and its derivatives refer to any direct or indirect communication between two or more elements, whether or not those elements are in physical contact with one another. The terms "transmit," "receive," and "communicate," as well as derivatives thereof, encompass both direct and indirect communication. The terms "include" and "comprise," as well as derivatives thereof, mean inclusion without limitation. The term "or" is inclusive, meaning and/or. The phrase "associated with," as well as derivatives thereof, means to include, be included within, connect to, interconnect with, contain, be contained within, connect to or with, couple to or with, be communicable with, cooperate with, interleave, juxtapose, be proximate to, be bound to or with, have, have a property of, have a relationship to or with, or the like. The term "controller" means any device, system or part thereof that controls at least one operation. Such a controller can be implemented in hardware or a combination of hardware and software and/or firmware. The functionality associated with any particular controller can be centralized or distributed, whether locally or remotely. The phrase "at least one of," when used with a list of items, means that different combinations of one or more of the listed items can be used, and only one item in the list can be needed. For example, "at least one of: A, B, and C" includes any of the following combinations: A, B, C, A and B, A and C, B and C, and A and B and C. For example, "at least one of: A, B, or C" includes any of the following combinations: A, B, C, A and B, A and C, B and C, and A, B and C.

Moreover, various functions described below can be implemented or supported by one or more computer programs, each of which is formed from computer-readable program code and embodied in a computer-readable medium. The terms "application" and "program" refer to one or more computer programs, software components, sets of instructions, procedures, functions, objects, classes, instances, related data, or a portion thereof adapted for implementation in a suitable computer-readable program code. The phrase "computer-readable program code" includes any type of computer code, including source code, object code, and executable code. The phrase "computer-readable medium" includes any type of medium capable of being accessed by a computer, such as Read-Only Memory (ROM), Random Access Memory (RAM), a hard disk drive, a Compact Disc (CD), a Digital Video Disc (DVD), or any other type of memory. A "non-transitory" computer-readable medium excludes wired, wireless, optical, or other communication links that transport transitory electrical or other signals. A non-transitory computer-readable medium includes media where data can be permanently stored and media where data can be stored and later overwritten, such as a rewritable optical disc or an erasable memory device.

It should be understood that "first", "second" and similar words used in the disclosure do not express any order, quantity or importance, but are only used to distinguish different components. Similar words such as singular forms "a", "an" or "the" do not express a limitation of quantity, but express the existence of at least one of the referenced item, unless the context clearly dictates otherwise. For example, reference to "a component surface" includes reference to one or more of such surfaces.

As used herein, any reference to "an example" or "example", "an implementation" or "implementation", "an embodiment" or "embodiment" means that particular elements, features, structures or characteristics described in connection with the embodiment is included in at least one embodiment. The phrases "in one embodiment" or "in one example" appearing in different places in the specification do not necessarily refer to the same embodiment.

As used herein, "a portion of" something means "at least some of" the thing, and as such may mean less than all of, or all of, the thing. As such, "a portion of" a thing includes the entire thing as a special case, i.e., the entire thing is an example of a portion of the thing.

As used herein, the term "set" means one or more. Accordingly, a set of items can be a single item or a collection of two or more items.

In this disclosure, to determine whether a specific condition is satisfied or fulfilled, expressions, such as "greater than" or "less than" are used by way of example and expressions, such as "greater than or equal to" or "less than or equal to" are also applicable and not excluded. For example, a condition defined with "greater than or equal to" may be replaced by "greater than" (or vice-versa), a condition defined with "less than or equal to" may be replaced by "less than" (or vice-versa), etc.

It will be further understood that similar words such as the term "include" or "comprise" mean that elements or objects appearing before the word encompass the listed elements or objects appearing after the word, but other elements or objects are not excluded. Similar words such as "connect" or "connected" are not limited to physical or mechanical connection, but can include electrical connection, whether direct or indirect. "Upper", "lower", "left" and "right" are only used to express a relative positional relationship, and when an absolute position of the described object changes, the relative positional relationship may change accordingly.

The various embodiments discussed below for describing the principles of the disclosure in the patent document are for illustration only and should not be interpreted as limiting the scope of the disclosure in any way. Those skilled in the art will understand that the principles of the disclosure can be implemented in any suitably arranged wireless communication system. For example, although the following detailed description of the embodiments of the disclosure will be directed to long term evolution (LTE) and/or 5G communication systems, those skilled in the art will understand that the main points of the disclosure can also be applied to other communication systems with similar technical backgrounds and channel formats with slight modifications without departing from the scope of the disclosure. The technical schemes of the embodiments of the present application can be applied to various communication systems, and for example, the communication systems may include global systems for mobile communications (GSM), code division multiple access (CDMA) systems, wideband code division multiple access (WCDMA) systems, general packet radio service (GPRS) systems, long term evolution (LTE) systems, LTE frequency division duplex (FDD) systems, LTE time division duplex (TDD) systems, universal mobile telecommunications system (UMTS), worldwide interoperability for microwave access (WiMAX) communication systems, 5th generation (5G) systems or new radio (NR) systems, etc. In addition, the technical schemes of the embodiments of the application can be applied to future-oriented communication technologies. In addition, the technical schemes of the embodiments of the disclosure can be applied to future-oriented communication technologies.

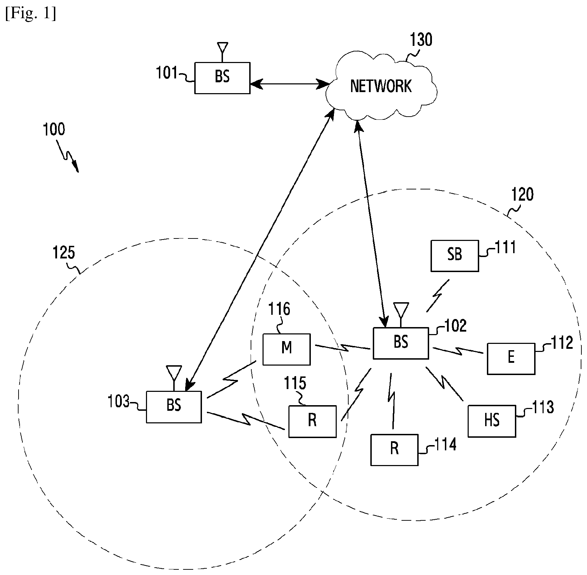

The following FIGS. 1, 2A, 2B, 3A, and 3B describe various embodiments implemented by using orthogonal frequency division multiplexing (OFDM) or orthogonal frequency division multiple access (OFDMA) communication technologies in wireless communication systems. The descriptions of FIGS. 1, 2A, 2B, 3A, and 3B do not mean physical or architectural implications for the manner in which different embodiments may be implemented. Different embodiments of the disclosure may be implemented in any suitably arranged communication systems.

FIG. 1 illustrates an example wireless network 100 according to an embodiment of the disclosure.

Referring to FIG. 1, the embodiment of the wireless network 100 is for illustration only. Other embodiments of the wireless network 100 can be used without departing from the scope of the disclosure.

The wireless network 100 includes a gNodeB (gNB) 101, a gNB 102, and a gNB 103. gNB 101 communicates with gNB 102 and gNB 103. gNB 101 also communicates with at least one Internet Protocol (IP) network 130, such as the Internet, a private IP network, or other data networks.

Depending on a type of the network, other well-known terms such as "base station (BS)" or "access point" can be used instead of "gNodeB" or "gNB". For convenience, the terms "gNodeB" and "gNB" are used in this patent document to refer to network infrastructure components that provide wireless access for remote terminals. And, depending on the type of the network, other well-known terms such as "mobile station", "user station", "remote terminal", "wireless terminal" or "user apparatus" can be used instead of "user equipment" or "UE". For example, the terms "terminal", "user equipment" and "UE" may be used in this patent document to refer to remote wireless devices that wirelessly access the gNB, no matter whether the UE is a mobile device (such as a mobile phone or a smart phone) or a fixed device (such as a desktop computer or a vending machine).

gNB 102 provides wireless broadband access to the network 130 for a first plurality of User Equipment (UEs) within a coverage area 120 of gNB 102. The first plurality of UEs include a UE 111, which may be located in a Small Business (SB); a UE 112, which may be located in an enterprise (E); a UE 113, which may be located in a Wi-Fi Hotspot (HS); a UE 114, which may be located in a first residence (R); a UE 115, which may be located in a second residence (R); a UE 116, which may be a mobile device (M), such as a cellular phone, a wireless laptop computer, a wireless PDA, etc. GNB 103 provides wireless broadband access to network 130 for a second plurality of UEs within a coverage area 125 of gNB 103. The second plurality of UEs include a UE 115 and a UE 116. In some embodiments, one or more of gNBs 101-103 can communicate with each other and with UEs 111-116 using 5G, Long Term Evolution (LTE), LTE-A, WiMAX or other advanced wireless communication technologies.

The dashed lines show approximate ranges of the coverage areas 120 and 125, and the ranges are shown as approximate circles merely for illustration and explanation purposes. It should be clearly understood that the coverage areas associated with the gNBs, such as the coverage areas 120 and 125, may have other shapes, including irregular shapes, depending on configurations of the gNBs and changes in the radio environment associated with natural obstacles and man-made obstacles.

As will be described in more detail below, one or more of gNB 101, gNB 102, and gNB 103 include a two-dimensional (2D) antenna array as described in embodiments of the disclosure. In some embodiments, one or more of gNB 101, gNB 102, and gNB 103 support codebook designs and structures for systems with 2D antenna arrays.

Although FIG. 1 illustrates an example of the wireless network 100, various changes can be made to FIG. 1. The wireless network 100 can include any number of gNBs and any number of UEs in any suitable arrangement, for example. Furthermore, gNB 101 can directly communicate with any number of UEs and provide wireless broadband access to the network 130 for those UEs. Similarly, each gNB 102-103 can directly communicate with the network 130 and provide direct wireless broadband access to the network 130 for the UEs. In addition, gNB 101, 102 and/or 103 can provide access to other or additional external networks, such as external telephone networks or other types of data networks.

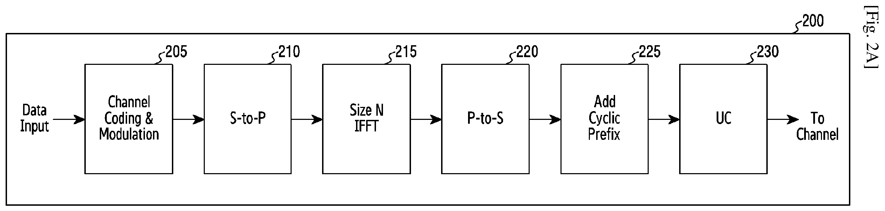

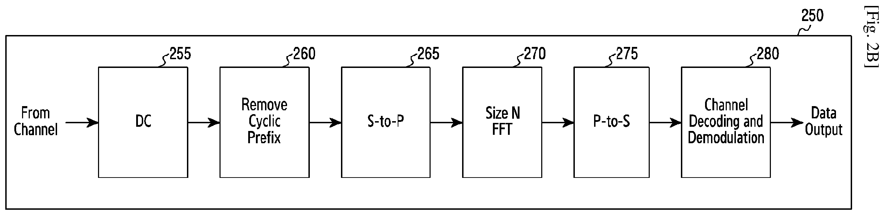

FIGS. 2A and 2B illustrate example wireless transmission and reception paths according to various embodiments of the disclosure.

In the following description, the transmission path 200 can be described as being implemented in a gNB, such as gNB 102, and the reception path 250 can be described as being implemented in a UE, such as UE 116. However, it should be understood that the reception path 250 can be implemented in a gNB and the transmission path 200 can be implemented in a UE. In some embodiments, the reception path 250 is configured to support codebook designs and structures for systems with 2D antenna arrays as described in embodiments of the disclosure.

The transmission path 200 includes a channel coding and modulation block 205, a Serial-to-Parallel (S-to-P) block 210, a size N Inverse Fast Fourier Transform (IFFT) block 215, a Parallel-to-Serial (P-to-S) block 220, a cyclic prefix addition block 225, and an up-converter (UC) 230. The reception path 250 includes a down-converter (DC) 255, a cyclic prefix removal block 260, a Serial-to-Parallel (S-toP) block 265, a size N Fast Fourier Transform (FFT) block 270, a Parallel-to-Serial (P-to-S) block 275, and a channel decoding and demodulation block 280.

In the transmission path 200, the channel coding and modulation block 205 receives a set of information bits, applies coding (such as Low Density Parity Check (LDPC) coding), and modulates the input bits (such as using Quadrature Phase Shift Keying (QPSK) or Quadrature Amplitude Modulation (QAM)) to generate a sequence of frequency-domain modulated symbols. The Serial-to-Parallel (S-to-P) block 210 converts (such as demultiplexes) serial modulated symbols into parallel data to generate N parallel symbol streams, where N is a size of the IFFT/FFT used in gNB 102 and UE 116. The size N IFFT block 215 performs IFFT operations on the N parallel symbol streams to generate a time domain output signal. The Parallel-to-Serial block 220 converts (such as multiplexes) parallel time domain output symbols from the Size N IFFT block 215 to generate a serial time domain signal. The cyclic prefix addition block 225 inserts a cyclic prefix into the time domain signal. The up-converter 230 modulates (such as up-converts) the output of the cyclic prefix addition block 225 to an RF frequency for transmission via a wireless channel. The signal can also be filtered at a baseband before switching to the RF frequency.

The RF signal transmitted from gNB 102 arrives at UE 116 after passing through the wireless channel, and operations in reverse to those at gNB 102 are performed at UE 116. The down-converter 255 down-converts the received signal to a baseband frequency, and the cyclic prefix removal block 260 removes the cyclic prefix to generate a serial time domain baseband signal. The Serial-to-Parallel block 265 converts the time domain baseband signal into a parallel time domain signal. The Size N FFT block 270 performs an FFT algorithm to generate N parallel frequency-domain signals. The Parallel-to-Serial block 275 converts the parallel frequency-domain signal into a sequence of modulated data symbols. The channel decoding and demodulation block 280 demodulates and decodes the modulated symbols to recover the original input data stream.

Each of gNBs 101-103 may implement a transmission path 200 similar to that for transmitting to UEs 111-116 in the downlink, and may implement a reception path 250 similar to that for receiving from UEs 111-116 in the uplink. Similarly, each of UEs 111-116 may implement a transmission path 200 for transmitting to gNBs 101-103 in the uplink, and may implement a reception path 250 for receiving from gNBs 101-103 in the downlink.

Each of the components in FIGS. 2A and 2B can be implemented using only hardware, or using a combination of hardware and software/firmware.

Referring to FIGS. 2A and 2B, at least some of the components may be implemented in software, while other components may be implemented in configurable hardware or a combination of software and configurable hardware. For example, the FFT block 270 and IFFT block 215 may be implemented as configurable software algorithms, in which the value of the size N may be modified according to the implementation.

Furthermore, although described as using FFT and IFFT, this is only illustrative and should not be interpreted as limiting the scope of the disclosure. Other types of transforms can be used, such as Discrete Fourier transform (DFT) and Inverse Discrete Fourier Transform (IDFT) functions. It should be understood that for DFT and IDFT functions, the value of variable N may be any integer (such as 1, 2, 3, 4, etc.), while for FFT and IFFT functions, the value of variable N may be any integer which is a power of 2 (such as 1, 2, 4, 8, 16, etc.).

Although FIGS. 2A and 2B illustrate examples of wireless transmission and reception paths, various changes may be made to FIGS. 2A and 2B. For example, various components in FIGS. 2A and 2B can be combined, further subdivided or omitted, and additional components can be added according to specific requirements. Furthermore, FIGS. 2A and 2B are intended to illustrate examples of types of transmission and reception paths that can be used in a wireless network. Any other suitable architecture can be used to support wireless communication in a wireless network.

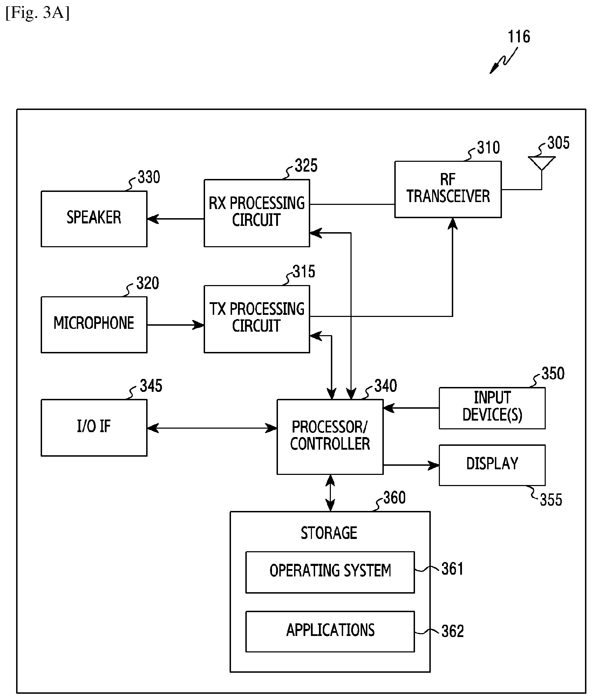

FIG. 3A illustrates an example UE 116 according to an embodiment of the disclosure.

Referring to FIG. 3A, the embodiment of UE 116 is for illustration only, and UEs 111-115 of FIG. 1 can have the same or similar configuration. However, a UE has various configurations, and FIG. 3A does not limit the scope of the disclosure to any specific implementation of the UE.

UE 116 includes an antenna 305, a radio frequency (RF) transceiver 310, a transmission (TX) processing circuit 315, a microphone 320, and a reception (RX) processing circuit 325. UE 116 also includes a speaker 330, a processor/controller 340, an input/output (I/O) interface 345, an input device(s) 350, a display 355, and a memory 360. The memory 360 includes an operating system (OS) 361 and one or more applications 362.

The RF transceiver 310 receives an incoming RF signal transmitted by a gNB of the wireless network 100 from the antenna 305. The RF transceiver 310 down-converts the incoming RF signal to generate an intermediate frequency (IF) or baseband signal. The IF or baseband signal is transmitted to the RX processing circuit 325, where the RX processing circuit 325 generates a processed baseband signal by filtering, decoding and/or digitizing the baseband or IF signal. The RX processing circuit 325 transmits the processed baseband signal to speaker 330 (such as for voice data) or to processor/controller 340 for further processing (such as for web browsing data).

The TX processing circuit 315 receives analog or digital voice data from microphone 320 or other outgoing baseband data (such as network data, email or interactive video game data) from processor/controller 340. The TX processing circuit 315 encodes, multiplexes, and/or digitizes the outgoing baseband data to generate a processed baseband or IF signal. The RF transceiver 310 receives the outgoing processed baseband or IF signal from the TX processing circuit 315 and up-converts the baseband or IF signal into an RF signal transmitted via the antenna 305.

The processor/controller 340 can include one or more processors or other processing devices and execute an OS 361 stored in the memory 360 in order to control the overall operation of UE 116. For example, the processor/controller 340 can control the reception of forward channel signals and the transmission of backward channel signals through the RF transceiver 310, the RX processing circuit 325 and the TX processing circuit 315 according to well-known principles. In some embodiments, the processor/controller 340 includes at least one microprocessor or microcontroller.

The processor/controller 340 is also capable of executing other processes and programs residing in the memory 360, such as operations for channel quality measurement and reporting for systems with 2D antenna arrays as described in embodiments of the disclosure. The processor/controller 340 can move data into or out of the memory 360 as required by an execution process. In some embodiments, the processor/controller 340 is configured to execute the application 362 based on the OS 361 or in response to signals received from the gNB or the operator. The processor/controller 340 is also coupled to an I/O interface 345, where the I/O interface 345 provides UE 116 with the ability to connect to other devices such as laptop computers and handheld computers. I/O interface 345 is a communication path between these accessories and the processor/controller 340.

The processor/controller 340 is also coupled to the input device(s) 350 and the display 355. An operator of UE 116 can input data into UE 116 using the input device(s) 350. The display 355 may be a liquid crystal display or other display capable of presenting text and/or at least limited graphics (such as from a website). The memory 360 is coupled to the processor/controller 340. A part of the memory 360 can include a random access memory (RAM), while another part of the memory 360 can include a flash memory or other read-only memory (ROM).

Although FIG. 3A illustrates an example of UE 116, various changes can be made to FIG. 3A. For example, various components in FIG. 3A can be combined, further subdivided or omitted, and additional components can be added according to specific requirements. As a specific example, the processor/controller 340 can be divided into a plurality of processors, such as one or more central processing units (CPUs) and one or more graphics processing units (GPUs). Furthermore, although FIG. 3A illustrates that the UE 116 is configured as a mobile phone or a smart phone, UEs can be configured to operate as other types of mobile or fixed devices.

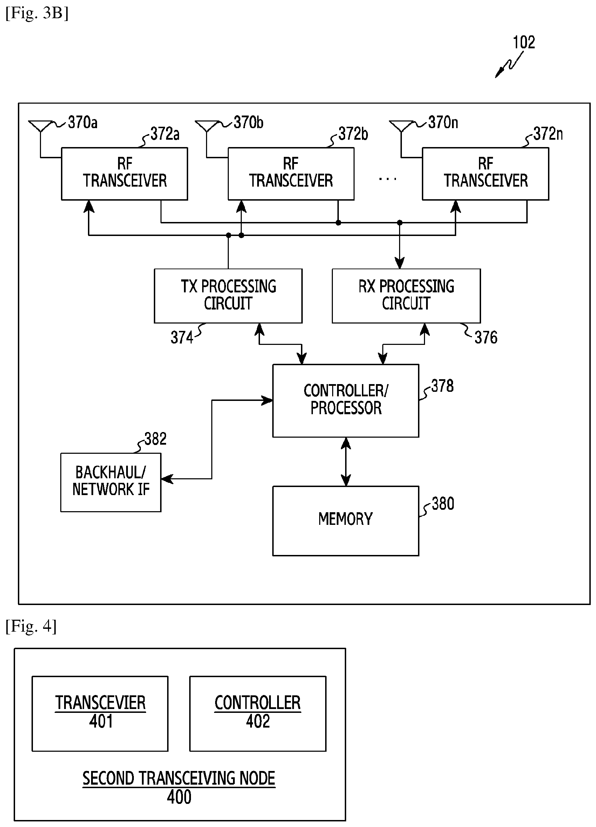

FIG. 3B illustrates an example gNB 102 according to an embodiment of the disclosure.

The embodiment of gNB 102 shown in FIG. 3B is for illustration only, and other gNBs of FIG. 1 can have the same or similar configuration. However, a gNB has various configurations, and FIG. 3B does not limit the scope of the disclosure to any specific implementation of a gNB. It should be noted that gNB 101 and gNB 103 can include the same or similar structures as gNB 102.

Referring to FIG. 3B, gNB 102 includes a plurality of antennas 370a, 370b, ..., 370n, a plurality of RF transceivers 372a, 372b, ..., 372n, a transmission (TX) processing circuit 374, and a reception (RX) processing circuit 376. In certain embodiments, one or more of the plurality of antennas 370a, 370b, ..., 370n include a 2D antenna array. gNB 102 also includes a controller/processor 378, a memory 380, and a backhaul or network interface 382.

RF transceivers 372a-372n receive an incoming RF signal from antennas 370a-370n, such as a signal transmitted by UEs or other gNBs. RF transceivers 372a-372n down-convert the incoming RF signal to generate an IF or baseband signal. The IF or baseband signal is transmitted to the RX processing circuit 376, where the RX processing circuit 376 generates a processed baseband signal by filtering, decoding and/or digitizing the baseband or IF signal. RX processing circuit 376 transmits the processed baseband signal to controller/processor 378 for further processing.

The TX processing circuit 374 receives analog or digital data (such as voice data, network data, email or interactive video game data) from the controller/processor 378. TX processing circuit 374 encodes, multiplexes and/or digitizes outgoing baseband data to generate a processed baseband or IF signal. RF transceivers 372a-372n receive the outgoing processed baseband or IF signal from TX processing circuit 374 and up-convert the baseband or IF signal into an RF signal transmitted via antennas 370a-370n.

The controller/processor 378 can include one or more processors or other processing devices that control the overall operation of gNB 102. For example, the controller/processor 378 can control the reception of forward channel signals and the transmission of backward channel signals through the RF transceivers 372a-372n, the RX processing circuit 376 and the TX processing circuit 374 according to well-known principles. The controller/processor 378 can also support additional functions, such as higher-level wireless communication functions. For example, the controller/processor 378 can perform a Blind Interference Sensing (BIS) process such as that performed through a BIS algorithm, and decode a received signal from which an interference signal is subtracted. A controller/processor 378 may support any of a variety of other functions in gNB 102. In some embodiments, the controller/processor 378 includes at least one microprocessor or microcontroller.

The controller/processor 378 is also capable of executing programs and other processes residing in the memory 380, such as a basic OS. The controller/processor 378 can also support channel quality measurement and reporting for systems with 2D antenna arrays as described in embodiments of the disclosure. In some embodiments, the controller/-processor 378 supports communication between entities such as web RTCs. The controller/processor 378 can move data into or out of the memory 380 as required by an execution process.

The controller/processor 378 is also coupled to the backhaul or network interface 382. The backhaul or network interface 382 allows gNB 102 to communicate with other devices or systems through a backhaul connection or through a network. The backhaul or network interface 382 can support communication over any suitable wired or wireless connection(s). For example, when gNB 102 is implemented as a part of a cellular communication system, such as a cellular communication system supporting 5G or new radio access technology or NR, LTE or LTE-A, the backhaul or network interface 382 can allow gNB 102 to communicate with other gNBs through wired or wireless backhaul connections. When gNB 102 is implemented as an access point, the backhaul or network interface 382 can allow gNB 102 to communicate with a larger network, such as the Internet, through a wired or wireless local area network or through a wired or wireless connection. The backhaul or network interface 382 includes any suitable structure that supports communication through a wired or wireless connection, such as an Ethernet or an RF transceiver.

The memory 380 is coupled to the controller/processor 378. A part of the memory 380 can include an RAM, while another part of the memory 380 can include a flash memory or other ROMs. In certain embodiments, a plurality of instructions, such as the BIS algorithm, are stored in the memory. The plurality of instructions are configured to cause the controller/processor 378 to execute the BIS process and decode the received signal after subtracting at least one interference signal determined by the BIS algorithm.

As will be described in more detail below, the transmission and reception paths of gNB 102 (implemented using RF transceivers 372a-372n, TX processing circuit 374 and/or RX processing circuit 376) support aggregated communication with FDD cells and TDD cells.

Although FIG. 3B illustrates an example of gNB 102, various changes may be made to FIG. 3B. For example, gNB 102 can include any number of each component shown in FIG. 3A. As a specific example, the access point can include many backhaul or network interfaces 382, and the controller/processor 378 can support routing functions to route data between different network addresses. As another specific example, although shown as including a single instance of the TX processing circuit 374 and a single instance of the RX processing circuit 376, gNB 102 can include multiple instances of each (such as one for each RF transceiver).

Those skilled in the art will understand that, "terminal" and "terminal device" as used herein include not only devices with wireless signal receiver which have no transmitting capability, but also devices with receiving and transmitting hardware which can carry out bidirectional communication on a bidirectional communication link. Such devices may include cellular or other communication devices with single-line displays or multi-line displays or cellular or other communication devices without multi-line displays; a personal communications service (PCS), which may combine voice, data processing, fax and/or data communication capabilities; a Personal Digital Assistant (PDA), which may include a radio frequency receiver, a pager, an internet/intranet access, a web browser, a notepad, a calendar and/or a Global Positioning System (GPS) receiver; a conventional laptop and/or palmtop computer or other devices having and/or including a radio frequency receiver. "Terminal" and "terminal device" as used herein may be portable, transportable, installed in vehicles (aviation, sea transportation and/or land), or suitable and/or configured to operate locally, and/or in distributed form, operate on the earth and/or any other position in space. "Terminal" and "terminal device" as used herein may also be a communication terminal, an internet terminal, a music/video playing terminal, such as a PDA, a MID (Mobile Internet Device) and/or a mobile phone with music/video playing functions, a smart TV, a set-top box and other devices.

With the rapid development of information industry, especially the increasing demand from mobile Internet and internet of things (IoT), it brings unprecedented challenges to the future mobile communication technology. According to the report of International Telecommunication Union (ITU) ITU-R M.[IMT.BEYOND 2020.TRAFFIC], it can be predicted that by 2020, compared with 2010 (fourth generation (4G) era), the growth of mobile traffic will be nearly 1000 times, and the number of UE connections will also exceed 17 billion, and the number of connected devices will be even more alarming, with the massive IoT devices gradually infiltrating into the mobile communication network. In order to meet the unprecedented challenges, the communication industry and academia have carried out extensive research on the fifth generation (5G) mobile communication technology to face the 2020s. At present in ITU report ITU-R M.[IMT.VISION], the framework and overall goals of the future 5G has been discussed, in which the demand outlook, application scenarios and important performance indicators of 5G are described in detail. With respect to new requirements in 5G, ITU report ITU-R M.[IMT.FUTURE TECHNOLOGY TRENDS] provides information related to the technology trends of 5G, aiming at solving significant problems such as significantly improved system throughput, consistent user experience, scalability to support IoT, delay, energy efficiency, cost, network flexibility, support of emerging services and flexible spectrum utilization. In 3rd Generation Partnership Project (3GPP), the first stage of 5G is already in progress. To support more flexible scheduling, the 3GPP decides to support variable Hybrid Automatic Repeat request-Acknowledgement (HARQ-ACK) feedback delay in 5G. In existing Long Term Evolution (LTE) systems, a time from reception of downlink data to uplink transmission of HARQ-ACK is fixed. For example, in Frequency Division Duplex (FDD) systems, the delay is 4 subframes. In Time Division Duplex (TDD) systems, a HARQ-ACK feedback delay is determined for a corresponding downlink subframe based on an uplink and downlink configuration. In 5G systems, whether FDD or TDD systems, for a determined downlink time unit (e.g., a downlink slot or a downlink mini slot), the uplink time unit that can feedback HARQ-ACK is variable. For example, the delay of HARQ-ACK feedback can be dynamically indicated by physical layer signaling, or different HARQ-ACK delays can be determined based on factors such as different services or user capabilities.

The 3GPP has defined three directions of 5G application scenarios-enhanced mobile broadband (eMBB), massive machine-type communication (mMTC) and ultra-reliable and low-latency communication (URLLC). The eMBB scenario aims to further improve data transmission rate on the basis of the existing mobile broadband service scenario, so as to enhance user experience and pursue ultimate communication experience between people. mMTC and URLLC are, for example, the application scenarios of the Internet of Things, but their respective emphases are different: mMTC being mainly information interaction between people and things, while URLLC mainly reflecting communication requirements between things.

Generally, a PUCCH repetition procedure does not support multiplexing of different UCI types in a PUCCH. At this time, if the starting time of a PUCCH with HARQ-ACK for a dynamically scheduled PDSCH is later than that of a PUCCH with HARQ-ACK for a semi-persistent scheduled (SPS) PDSCH, the UE will cancel the transmission of the HARQ-ACK for the dynamic scheduled PDSCH. In addition, if a PUSCH and a PUCCH repetition overlap in time domain, the UE will cancel the transmission of the PUSCH. In these cases, how to improve the performance of the dynamic scheduling is a problem to be resolved.

In order to resolve at least the above technical problems, embodiments of the disclosure provide a method performed by a terminal, the terminal, a method performed by a base station and the base station in a wireless communication system, and a non-transitory computer-readable storage medium. Hereinafter, various embodiments of the disclosure will be described in detail with reference to the accompanying drawings.

In embodiments of the disclosure, for the convenience of description, a first transceiving node and a second transceiving node are defined. For example, the first transceiving node may be a base station, and the second transceiving node may be a UE. In the following examples, the base station is taken as an example (but not limited thereto) to illustrate the first transceiving node, and the UE is taken as an example (but not limited thereto) to illustrate the second transceiving node.

Various embodiments of the disclosure are further described below with reference to the drawings.

The text and drawings are provided as examples only to help readers understand the disclosure. They are not intended and should not be interpreted as limiting the scope of the disclosure in any way. Although certain embodiments and examples have been provided, based on the content disclosed herein, it will be apparent to those skilled in the art that changes may be made to the illustrated embodiments and examples without departing from the scope of the disclosure.

FIG. 4 illustrates a block diagram of the second transceiving node according to an embodiment of the disclosure.

Referring to FIG. 4, the second transceiving node 400 may include a transceiver 401 and a controller 402.

The transceiver 401 may be configured to receive first data and/or first control signaling from the first transceiving node, and transmit second data and/or second control signaling to the first transceiving node in a determined time unit.

The controller 402 may be an application specific integrated circuit or at least one processor. The controller 402 may be configured to control the overall operation of the second transceiving node and control the second transceiving node to implement the methods proposed in the embodiments of the disclosure. For example, the controller 402 may be configured to determine the second data and/or the second control signaling and a time unit for transmitting the second data and/or the second control signaling based on the first data and/or the first control signaling, and control the transceiver 401 to transmit the second data and/or the second control signaling to the first transceiving node in the determined time unit.

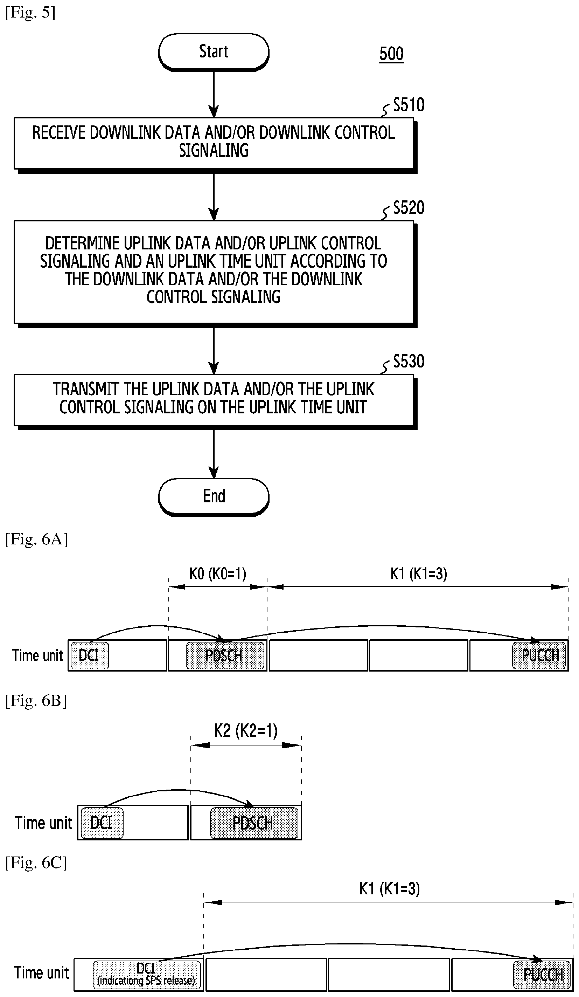

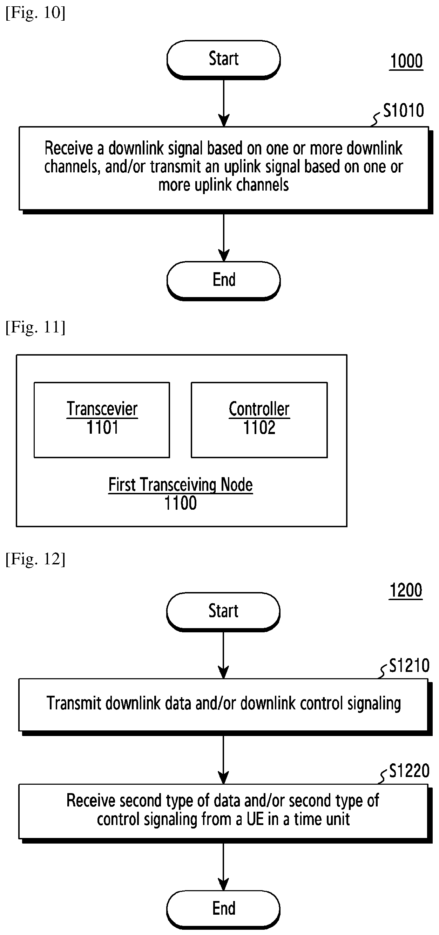

In some implementations, the controller 402 may be configured to perform one or more operations in methods of various embodiments described below. For example, the controller 402 may be configured to perform one or more of operations in a method 500 to be described later in connection with FIG. 5 and/or a method 1000 described in connection with FIG. 10.

In some implementations, the first data may be data transmitted by the first transceiving node to the second transceiving node. In the following examples, downlink data carried by a Physical Downlink Shared Channel (PDSCH) is taken as an example (but not limited thereto) to illustrate the first data.

In some implementations, the second data may be data transmitted by the second transceiving node to the first transceiving node. In the following examples, uplink data carried by a Physical Uplink Shared Channel (PUSCH) is taken as an example to illustrate the second data, but not limited thereto.

In some implementations, the first control signaling may be control signaling transmitted by the first transceiving node to the second transceiving node. In the following examples, downlink control signaling is taken as an example (but not limited thereto) to illustrate the first control signaling. The downlink control signaling may be downlink control information (DCI) carried by a Physical Downlink Control Channel (PDCCH) and/or control signaling carried by a Physical Downlink Shared Channel (PDSCH). For example, the DCI may be UE specific DCI, and the DCI may also be common DCI. The common DCI may be DCI common to a part of UEs, such as group common DCI, and the common DCI may also be DCI common to all of the UEs. The DCI may be uplink DCI (e.g., DCI for scheduling a PUSCH) and/or downlink DCI (e.g., DCI for scheduling a PDSCH).

In some implementations, the second control signaling may be control signaling transmitted by the second transceiving node to the first transceiving node. In the following examples, uplink control signaling is taken as an example (but is not limited thereto) to illustrate the second control signaling. The uplink control signaling may be Uplink Control Information (UCI) carried by a Physical Uplink Control Channel (PUCCH) and/or control signaling carried by a Physical Uplink Shared Channel (PUSCH). A type of UCI may include one or more of: HARQ-ACK information, Scheduling Request (SR), Link Recovery Request (LRR), Chanel State Information (CSI) or Configured Grant (CG) UCI. In embodiments of the disclosure, when UCI is carried by a PUCCH, the UCI may be used interchangeably with the PUCCH.

In some implementations, a PUCCH carrying SR may be a PUCCH carrying positive SR and/or negative SR. The SR may be positive SR and/or negative SR.

In some implementations, the CSI may also be Part 1 CSI and/or Part 2 CSI.

In some implementations, a first time unit is a time unit in which the first transceiving node transmits the first data and/or the first control signaling. In the following examples, a downlink time unit is taken as an example (but not limited thereto) to illustrate the first time unit.

In some implementations, a second time unit is a time unit in which the second transceiving node transmits the second data and/or the second control signaling. In the following examples, an uplink time unit is taken as an example (but not limited thereto) to illustrate the second time unit.

In some implementations, the first time unit and the second time unit may be one or more slots, one or more subslots, one or more OFDM symbols, or one or more subframes.

Herein, depending on the network type, the term "base station" or "BS" can refer to any component (or a set of components) configured to provide wireless access to a network, such as a Transmission Point (TP), a Transmission and Reception Point (TRP), an evolved base station (eNodeB or eNB), a 5G base station (gNB), a macrocell, a femtocell, a Wi-Fi access point (AP), or other wirelessly enabled devices. Base stations may provide wireless access in accordance with one or more wireless communication protocols, e.g., 5G 3GPP new radio (NR) interface/access, Long Term Evolution (LTE), LTE advanced (LTE-A), High Speed Packet Access (HSPA), wireless fidelity (Wi-Fi) 802.11a/b/g/n/ac, etc.

In describing a wireless communication system and in the disclosure described below, higher layer signaling or higher layer signals are signal transferring methods for transferring information from a base station to a terminal over a downlink data channel of a physical layer or from a terminal to a base station over an uplink data channel of a physical layer, and examples of the signal transferring methods may include signal transferring methods for transferring information via Radio Resource Control (RRC) signaling, Packet Data Convergence Protocol (PDCP) signaling, or a Medium Access Control (MAC) Control Element (MAC CE).

FIG. 5 illustrates a flowchart of a method performed by a UE (or, a terminal) according to an embodiment of the disclosure.

Referring to FIG. 5, in operation S510, the UE may receive downlink data (e.g., downlink data carried by a PDSCH) and/or downlink control signaling from a base station. For example, the UE may receive the downlink data and/or the downlink control signaling from the base station based on predefined rules and/or received configuration parameters.

In operation S520, the UE determines uplink data and/or uplink control signaling and an uplink time unit based on the downlink data and/or downlink control signaling.

In operation S530, the UE transmits the uplink data and/or the uplink control signaling to the base station in an uplink time unit.

In some implementations, acknowledgement/negative acknowledgement (ACK/NACK) for downlink transmissions may be performed through HARQ-ACK.

In some implementations, the downlink control signaling may include DCI carried by a PDCCH and/or control signaling carried by a PDSCH. For example, the DCI may be used to schedule transmission of a PUSCH or reception of a PDSCH. Some examples of uplink transmission timing will be described below with reference to FIGS. 6A, 6B, and 6C.

FIGS. 6A, 6B, and 6C illustrate some examples of uplink transmission timing according to various embodiments of the disclosure.

In an example, the UE receives the DCI and receives the PDSCH based on time domain resources indicated by the DCI. For example, a parameter K0 may be used to represent a time interval between the PDSCH scheduled by the DCI and the PDCCH carrying the DCI, and K0 may be in units of slots.

Referring to FIG. 6A, it gives an example in which K0=1. In the example illustrated in FIG. 6A, the time interval from the PDSCH scheduled by the DCI to the PDCCH carrying the DCI is one slot. In embodiments of the disclosure, "a UE receives DCI" may mean that "the UE detects the DCI".

In another example, the UE receives the DCI and transmits the PUSCH based on time domain resources indicated by the DCI. For example, a timing parameter K2 may be used to represent a time interval between the PUSCH scheduled by the DCI and the PDCCH carrying the DCI, and K2 may be in units of slots.

Referring to FIG. 6B, it gives an example in which K2=1. In the example illustrated in FIG. 6B, the time interval between the PUSCH scheduled by the DCI and the PDCCH carrying the DCI is one slot. K2 may also represent a time interval between a PDCCH for activating a configured grant (CG) PUSCH and the first activated CG PUSCH. In examples of the disclosure, unless otherwise specified, the PUSCH may be a dynamically scheduled PUSCH (e.g., scheduled by DCI) (e.g., may be referred to as dynamic grant (DG) PUSCH, in embodiments of the disclosure) and/or a PUSCH not scheduled by DCI (e.g., CG PUSCH).

In yet another example, the UE receives the PDSCH, and may transmit HARQ-ACK information for the PDSCH reception in a PUCCH in the uplink time unit. For example, a timing parameter (which may also be referred to as a timing value) K1 (e.g., the parameter dl-DataToUL-ACK in 3GPP) may be used to represent a time interval between the PUCCH for transmitting the HARQ-ACK information for the PDSCH reception and the PDSCH, and K1 may be in units of uplink time units, such as slots or subslots. In a case where K1 is in units of slots, the time interval is a value of a slot offset between the PUCCH for feeding back the HARQ-ACK information for the PDSCH reception and the PDSCH, and K1 may be referred to as a slot timing value. For example, FIG. 6A gives an example in which K1=3. In the example illustrated in FIG. 6A, the time interval between the PUCCH for transmitting the HARQ-ACK information for the PDSCH reception and the PDSCH is 3 slots. It should be noted that in embodiments of the disclosure, the timing parameter K1 may be used interchangeably with a timing parameter K1, the timing parameter K0 may be used interchangeably with a timing parameter K0, and the timing parameter K2 may be used interchangeably with a timing parameter K2.

The PDSCH may be a PDSCH scheduled by the DCI and/or a SPS PDSCH. The UE will periodically receive the SPS PDSCH after the SPS PDSCH is activated by the DCI. In examples of the disclosure, the SPS PDSCH may be equivalent to a PDSCH not scheduled by the DCI/PDCCH. After the SPS PDSCH is released (deactivated), the UE will no longer receive the SPS PDSCH.

In embodiments of the disclosure, HARQ-ACK may be HARQ-ACK for a SPS PDSCH reception (e.g., HARQ-ACK not indicated by DCI) and/or HARQ-ACK indicated by a DCI format (e.g., HARQ-ACK for a PDSCH reception scheduled by a DCI format).

In yet another example, the UE receives the DCI (e.g., DCI indicating Semi-Persistent Scheduling (SPS) PDSCH release (deactivation)), and may transmit HARQ-ACK information for the DCI in the PUCCH in the uplink time unit. For example, the timing parameter K1 may be used to represent a time interval between the PUCCH for transmitting the HARQ-ACK information for the DCI and the DCI, and K1 may be in units of uplink time units, such as slots or subslots.

Referring to FIG. 6C, it gives an example in which K1=3. In the example of FIG. 6C, the time interval between the PUCCH for transmitting the HARQ-ACK information for the DCI and the DCI is 3 slots. For example, the timing parameter K1 may be used to represent a time interval between a PDCCH reception with DCI indicating SPS PDSCH release (deactivation) and the PUCCH feeding back HARQ-ACK for the PDCCH reception.

In some implementations, in operation S520, the UE may report (or signal/transmit) a UE capability to the base station or indicate the UE capability. For example, the UE reports (or signals/transmits) the UE capability to the base station by transmitting the PUSCH. In this case, the UE capability information is included in the PUSCH transmitted by the UE.

In some implementations, the base station may configure higher layer signaling for the UE based on a UE capability previously received from the UE (e.g., in operation S510 in the previous downlink-uplink transmission processes). For example, the base station configures the higher layer signaling for the UE by transmitting the PDSCH. In this case, the higher layer signaling configured for the UE is included in the PDSCH transmitted by the base station. It should be noted that the higher layer signaling is higher layer signaling compared with physical layer signaling, and the higher layer signaling may include RRC signaling and/or a MAC CE.

In some implementations, downlink channels (downlink resources) may include PDCCHs and/or PDSCHs. Uplink channels (uplink resources) may include PUCCHs and/or PUSCHs.

In some implementations, the UE may be configured with two levels of priorities for uplink transmission. For example, the UE may be configured to multiplex UCIs with different priorities via higher layer signaling (e.g., through the 3GPP parameter UCI-MUXWithDifferentiatPriority); otherwise (e.g., if the UE is not configured to multiplex UCIs with different priorities), the UE performs prioritization for PUCCHs and/or PUSCHs with different priorities. For example, the two levels of priorities may include a first priority and a second priority which are different from each other. In an example, the first priority may be higher than the second priority, that is, the first priority is the higher priority, and the second priority is the lower priority. In another example, the first priority may be lower than the second priority. However, embodiments of the disclosure are not limited to this, and for example, the UE may be configured with more than two levels of priorities. For the sake of convenience, in embodiments of the disclosure, description will be made considering that the first priority is higher than the second priority. It should be noted that all embodiments of the disclosure are applicable to situations where the first priority may be higher than the second priority; all embodiments of the disclosure are applicable to situations where the first priority may be lower than the second priority; and all embodiments of the disclosure are applicable to situations where the first priority may be equal to the second priority.

In some examples, the multiplexing of multiple uplink transmissions (e.g., PUCCHs and/or PUSCHs) overlapping in time domain may be the multiplexing of UCI information included in the PUCCHs in a PUCCH or PUSCH.

In some examples, the UE prioritizing two uplink transmissions (e.g., PUCCHs and/or PUSCHs) overlapping in time domain may include the UE transmitting the uplink transmission (e.g., PUCCH or PUSCH) with higher priority and not transmitting the uplink transmission (PUCCH or PUSCH) with lower priority.

In some implementations, the UE may be configured with a subslot-based PUCCH transmission. For example, a subslot length parameter (which may also be referred to as a parameter related to a subslot length in embodiments of the disclosure) (e.g., the parameter subslotLengthForPUCCH in 3GPP) of each PUCCH configuration parameter of the first PUCCH configuration parameter and the second PUCCH configuration parameter may be 7 OFDM symbols or 6 OFDM symbols or 2 OFDM symbols. Subslot configuration length parameters in different PUCCH configuration parameters may be configured separately. If no subslot length parameter is configured in a PUCCH configuration parameter, the scheduling time unit of this PUCCH configuration parameter is one slot by default. If a subslot length parameter is configured in the PUCCH configuration parameter, the scheduling time unit of this PUCCH configuration parameter is L (L is the configured subslot configuration length) OFDM symbols.

The mechanism of slot-based PUCCH transmissions is basically the same as that of subslot-based PUCCH transmissions. In the disclosure, a slot may be used to represent a PUCCH occasion unit; for example, if the UE is configured with subslots, a slot which is a PUCCH occasion unit may be replaced with a subslot. For example, it may be specified by protocols that if the UE is configured with the subslot length parameter (e.g., the parameter subslotLengthForPUCCH in 3GPP), unless otherwise indicated, a number of symbols contained in the slot of the PUCCH transmission is indicated by the subslot length parameter.

For example, if the UE is configured with the subslot length parameter, and subslot n is the last uplink subslot overlapping with a PDSCH reception or PDCCH reception (e.g., for SPS PDSCH release, and/or indicating secondary cell dormancy, and/or triggering a Type-3 HARQ-ACK codebook report and without scheduling a PDSCH reception), then HARQ-ACK information for the PDSCH reception or PDCCH reception is transmitted in an uplink subslot n+k, where k is determined by the timing parameter K1 (the definition of the timing parameter K1 may refer to the previous description). For another example, if the UE is not configured with the subslot length parameter, and slot n is the last uplink slot overlapping with a downlink slot where the PDSCH reception or PDCCH reception is located, then the HARQ-ACK information for the PDSCH reception or PDCCH reception is transmitted in an uplink slot n+k, where K is determined by the timing parameter K1.

In embodiments of the disclosure, unicast may refer to a manner in which a network communicates with a UE, and multicast or groupcast may refer to a manner in which a network communicates with multiple UEs. For example, a unicast PDSCH may be a PDSCH received by a UE, and the scrambling of the PDSCH may be based on a Radio Network Temporary Identifier (RNTI) specific to the UE, e.g., Cell-RNTI (C-RNTI). A multicast PDSCH may be a PDSCH received by more than one UE simultaneously, and the scrambling of the multicast PDSCH may be based on a UE-group common RNTI. For example, the UE-group common RNTI for scrambling the multicast PDSCH may include an RNTI (referred to as G-RNTI in embodiments of the disclosure) for scrambling of a dynamically scheduled multicast transmission (e.g., PDSCH) or an RNTI (referred to as G-CS-RNTI in embodiments of the disclosure) for scrambling of a multicast SPS transmission (e.g., SPS PDSCH). The G-CS-RNTI and the G-RNTI may be different RNTIs or same RNTI. UCI(s) of the unicast PDSCH may include HARQ-ACK information, SR, or CSI of the unicast PDSCH reception. UCI(s) of the multicast PDSCH may include HARQ-ACK information for the multicast PDSCH reception. In embodiments of the disclosure, "multicast" may also be replaced with "broadcast".

In some implementations, a HARQ-ACK codebook may include HARQ-ACK information for one or more PDSCHs and/or DCI. If the HARQ-ACK information for the one or more PDSCHs and/or DCI is transmitted in a same uplink time unit, the UE may generate the HARQ-ACK codebook based on a predefined rule. For example, if a PDSCH is successfully decoded, the HARQ-ACK information for this PDSCH reception is positive ACK. The positive ACK may be represented by 1 in the HARQ-ACK codebook, for example. If a PDSCH is not successfully decoded, the HARQ-ACK information for this PDSCH reception is Negative ACK (NACK). NACK may be represented by 0 in the HARQ-ACK codebook, for example. For example, the UE may generate the HARQ-ACK codebook based on the pseudo code specified by protocols. In an example, if the UE receives a DCI format that indicates SPS PDSCH release (deactivation), the UE transmits HARQ-ACK information (ACK) for the DCI format. In another example, if the UE receives a DCI format that indicates secondary cell dormancy, the UE transmits the HARQ-ACK information (ACK) for the DCI format. In yet another example, if the UE receives a DCI format that indicates to transmit HARQ-ACK information (e.g., a Type-3 HARQ-ACK codebook in 3GPP) of all HARQ-ACK processes of all configured serving cells, the UE transmits the HARQ-ACK information of all HARQ-ACK processes of all configured serving cells. In order to reduce a size of the Type-3 HARQ-ACK codebook, in an enhanced Type-3 HARQ-ACK codebook, the UE may transmit HARQ-ACK information of a specific HARQ-ACK process of a specific serving cell based on an indication of the DCI. In yet another example, if the UE receives a DCI format that schedules a PDSCH, the UE transmits HARQ-ACK information for the PDSCH reception. In yet another example, the UE receives a SPS PDSCH, and the UE transmits HARQ-ACK information for the SPS PDSCH reception. In yet another example, if the UE is configured by higher layer signaling to receive a SPS PDSCH, the UE transmits HARQ-ACK information for the SPS PDSCH reception. The reception of the SPS PDSCH configured by higher layer signaling may be cancelled by other signaling. In yet another example, if at least one uplink symbol (e.g., OFDM symbol) of the UE in a semi-static frame structure configured by higher layer signaling overlaps with a symbol of a SPS PDSCH reception, the UE does not receive the SPS PDSCH. In yet another example, if the UE is configured by higher layer signaling to receive a SPS PDSCH according to a predefined rule, the UE transmits HARQ-ACK information for the SPS PDSCH reception. It should be noted that in embodiments of the disclosure, "A" overlapping with "B" may mean that "A" at least partially overlaps with "B". That is, "A" overlapping with "B" includes the case that "A" completely overlaps with "B".

In some implementations, if HARQ-ACK information transmitted in a same uplink time unit does not include HARQ-ACK information for any DCI format, nor does it include HARQ-ACK information for a dynamically scheduled PDSCH (e.g., a PDSCH scheduled by a DCI format) and/or DCI, or the HARQ-ACK information transmitted in the same uplink time unit only includes HARQ-ACK information for one or more SPS PDSCH receptions, the UE may generate HARQ-ACK information according to a rule for generating a SPS PDSCH HARQ-ACK codebook.

In some implementations, if HARQ-ACK information transmitted in a same uplink time unit includes HARQ-ACK information for a DCI format, and/or a dynamically scheduled PDSCH (e.g., a PDSCH scheduled by a DCI format), the UE may generate HARQ-ACK information according to a rule for generating a HARQ-ACK codebook for a dynamically scheduled PDSCH and/or a DCI format. For example, the UE may determine to generate a semi-static HARQ-ACK codebook (e.g., Type-1 HARQ-ACK codebook in 3GPP) or a dynamic HARQ-ACK codebook (e.g., Type-2 HARQ-ACK codebook in 3GPP) according to a PDSCH HARQ-ACK codebook configuration parameter (e.g., the parameter pdsch-HARQ-ACK-Codebook in 3GPP). The dynamic HARQ-ACK codebook may also be an enhanced dynamic HARQ-ACK codebook (e.g., Type-2 HARQ-ACK codebook based on grouping and HARQ-ACK retransmission in 3GPP).

In some implementations, if HARQ-ACK information transmitted in a same uplink time unit includes only HARQ-ACK information for a SPS PDSCH (e.g., a PDSCH not scheduled by a DCI format), the UE may generate the HARQ-ACK codebook according to a rule for generating a HARQ-ACK codebook for a SPS PDSCH reception (e.g., the pseudo code for generating a HARQ-ACK codebook for a SPS PDSCH reception defined in 3GPP).

The semi-static HARQ-ACK codebook (e.g., 3GPP TS 38.213 Type-1 HARQ-ACK codebook) may determine the size of the HARQ-ACK codebook and an order of HARQ-ACK bits according to a semi-statically parameter (e.g., a parameter configured by higher layer signaling). For a serving cell c, an active downlink bandwidth part (BWP) and an active uplink BWP, the UE determines a set of $M_{A,c}$ occasions for candidate PDSCH receptions for which the UE can transmit corresponding HARQ-ACK information in a PUCCH in an uplink slot $n_U$.

$M_{A,c}$ may be determined by at least one of:

a) HARQ-ACK slot timing values K1 of the active uplink BWP;
b) a downlink time domain resource allocation (TDRA) table;
c) an uplink SCS configuration and a downlink SCS configuration;
d) a semi-static uplink and downlink frame structure configuration;

e) a downlink slot offset parameter (e.g., the 3GPP parameter $N_{\text{slot,offset,c}}^{\text{DL}}$) for the serving cell c and its corresponding slot offset SCS (e.g., the 3GPP parameter $\mu_{\text{offset,DL,c}}$), and a slot offset parameter (e.g., the 3GPP parameter $N_{\text{slot,offset}}^{\text{UL}}$) for a primary serving cell and its corresponding slot offset SCS (e.g., the 3GPP parameter $\mu_{\text{offset,UL}}$).

The parameter K1 is used to determine a candidate uplink slot, and then determine candidate downlink slots according to the candidate uplink slot. The candidate downlink slots satisfy at least one of the following conditions: (i) if the time unit of the PUCCH is a subslot, the end of at least one candidate PDSCH reception in the candidate downlink slots overlaps with the candidate uplink slot in time domain; or (ii) if the time unit of the PUCCH is a slot, the end of the candidate downlink slots overlap with the candidate uplink slot in time domain. It should be noted that, in embodiments of the disclosure, a start symbol may be used interchangeably with a starting position, and an end symbol may be used interchangeably with an end position. In some implementations, the start symbol may be replaced by the end symbol, and/or the end symbol may be replaced by the start symbol.

A number of PDSCHs in a candidate downlink slot for which HARQ-ACK needs to be fed back may be determined by a maximum value of a number of nonoverlapping valid PDSCHs in the downlink slot (e.g., the valid PDSCHs may be PDSCHs that do not overlap with semi-statically configured uplink symbols). Time domain resources occupied by the PDSCHs may be determined by (i) a time domain resource allocation table configured by higher layer signaling (in embodiments of the disclosure, it may also be referred to as a table associated with time domain resource allocation) and (ii) a certain row in the time domain resource allocation table dynamically indicated by DCI. Each row in the time domain resource allocation table may define information related to time domain resource allocation. For example, for the time domain resource allocation table, an indexed row defines a timing value (e.g., time unit (e.g., slot) offset (e.g., K0)) between a PDCCH and a PDSCH, and a start and length indicator (SLIV), or directly defines a start symbol and allocation length. For example, for the first row of the time domain resource allocation table, a start OFDM symbol is 0 and an OFDM symbol length is 4; for the second row of the time domain resource allocation table, the start OFDM symbol is 4 and the OFDM symbol length is 4; and for the third row of the time domain resource allocation table, the start OFDM symbol is 7 and the OFDM symbol length is 4. The DCI for scheduling the PDSCH may indicate any row in the time domain resource allocation table. When all OFDM symbols in the downlink slot are downlink symbols, the maximum value of the number of nonoverlapping valid PDSCHs in the downlink slot is 2. At this time, the Type-1 HARQ-ACK codebook may need to feed back HARQ-ACK information for two PDSCHs in the downlink slot of the serving cell.

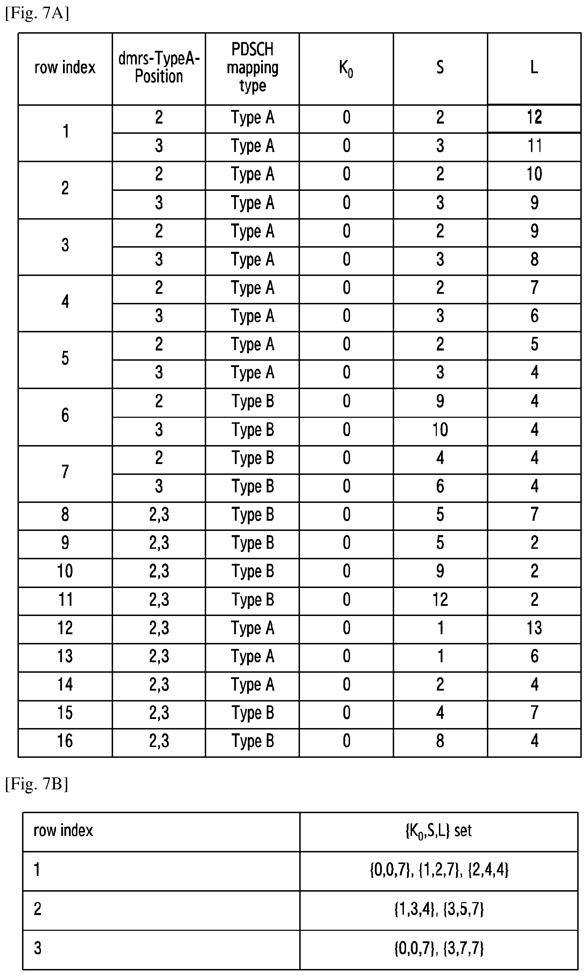

FIGS. 7A and 7B illustrate examples of a time domain resource allocation table according to various embodiments of the disclosure.

Specifically, FIG. 7A illustrates a time domain resource allocation table in which one PDSCH is scheduled by one row, and FIG. 7B illustrates a time domain resource allocation table in which multiple PDSCHs are scheduled by one row. Referring to FIG. 7A, each row corresponds to a value of a timing parameter K0, a value of S indicating a start symbol, and a value of L indicating a length, where an SLIV may be determined by the value of S and the value of L. Referring to FIG. 7B, unlike FIG. 7A, each row corresponds to values of multiple sets of {K0, S, L}.

In some implementations, the dynamic HARQ-ACK codebook (e.g., a 3GPP Type-2 HARQ-ACK codebook) and/or the enhanced dynamic HARQ-ACK codebook (e.g., a 3GPP Type-2 HARQ-ACK based on grouping and HARQ-ACK retransmission) may determine a size and an order of the HARQ-ACK codebook according to an assignment indicator. For example, the assignment indicator may be a DAI (Downlink Assignment Indicator). In the following embodiments, the assignment indicator as the DAI is taken as an example for illustration. However, the embodiments of the disclosure are not limited thereto, and any other suitable assignment indicator may be adopted.

In some implementations, a DAI field includes at least one of a first DAI and a second DAI.

In some examples, the first DAI may be a Counter-DAI (C-DAI). The first DAI may indicate an accumulative number of at least one of DCI scheduling PDSCH(s), DCI indicating SPS PDSCH release (deactivation), or DCI indicating secondary cell dormancy. For example, the accumulative number may be an accumulative number up to the current serving cell and/or the current time unit. For example, C-DAI may refer to: an accumulative number of {serving cell, time unit} pair(s) scheduled by PDCCH(s) up to the current time unit within a time window (which may also include a number of PDCCHs (e.g., PDCCHs indicating SPS release and/or PDCCHs indicating secondary cell dormancy)); or an accumulative number of PDCCH(s) up to the current time unit; or an accumulative number of PDSCH transmission(s) up to the current time unit; or an accumulative number of {serving cell, time unit} pair(s) in which PDSCH transmission(s) related to PDCCH(s) (e.g., scheduled by the PDCCH(s)) and/or PDCCH(s) (e.g., PDCCH indicating SPS release and/or PDCCH indicating secondary cell dormancy) is present, up to the current serving cell and/or the current time unit; or an accumulative number of PDSCH(s) with corresponding PDCCH(s) and/or PDCCHs (e.g., PDCCHs indicating SPS release and/or PDCCHs indicating secondary cell dormancy) already scheduled by a base station up to the current serving cell and/or the current time unit; or an accumulative number of PDSCHs (the PDSCHs are PDSCHs with corresponding PDCCHs) already scheduled by the base station up to the current serving cell and/or the current time unit; or an accumulative number of time units with PDSCH transmissions (the PDSCHs are PDSCHs with corresponding PDCCHs) already scheduled by the base station up to the current serving cell and/or the current time unit. The order of each bit in the HARQ-ACK codebook corresponding to at least one of PDSCH reception(s), DCI(s) indicating SPS PDSCH release (deactivation), or DCI(s) indicating secondary cell dormancy may be determined by the time when the first DAI is received and the information of the first DAI. The first DAI may be included in a downlink DCI format.

In some examples, the second DAI may be a Total-DAI (T-DAI). The second DAI may indicate a total number of at least one of all PDSCH receptions, DCI indicating SPS PDSCH release (deactivation), or DCI indicating secondary cell dormancy. For example, the total number may be a total number of all serving cells up to the current time unit. For example, T-DAI may refer to: a total number of {serving cell, time unit} pairs scheduled by PDCCH(s) up to the current time unit within a time window (which may also include a number of PDCCHs for indicating SPS release); or a total number of PDSCH transmissions up to the current time unit; or a total number of {serving cell, time unit} pairs in which PDSCH transmission(s) related to PDCCH(s) (e.g., scheduled by the PDCCH) and/or PDCCH(s) (e.g., a PDCCH indicating SPS release and/or a PDCCH indicating secondary cell dormancy) is present, up to the current serving cell and/or the current time unit; or a total number of PDSCHs with corresponding PDCCHs and/or PDCCHs (e.g., PDCCHs indicating SPS release and/or PDCCHs indicating secondary cell dormancy) already scheduled by a base station up to the current serving cell and/or the current time unit; or a total number of PDSCHs (the PDSCHs are PDSCHs with corresponding PDCCHs) already scheduled by the base station up to the current serving cell and/or the current time unit; or a total number of time units with PDSCH transmissions (e.g., the PDSCHs are PDSCHs with corresponding PDCCHs) already scheduled by the base station up to the current serving cell and/or the current time unit. The second DAI may be included in the downlink DCI format and/or an uplink DCI format. The second DAI included in the uplink DCI format is also referred to as UL DAI.

In the following examples, the first DAI as the C-DAI and the second DAI as the T-DAI are taken as an example for illustration, but the examples are not limited thereto.

Tables 1 and 2 show a correspondence between the DAI field and $V_{T\text{-DAI},m}$ or $V_{C\text{-DAI},c,m}$ or $V_{\text{T-DAI}}^{\text{UL}}$. Numbers of bits of the C-DAI and T-DAI are limited.

For example, in a case where the C-DAI or T-DAI is represented with 2 bits, the value of the C-DAI or T-DAI in the DCI may be determined by equations in Table 1. $V_{T\text{-DAI},m}$, or $V_{\text{T-DAI}}^{\text{UL}}$ is the value of the T-DAI in DCI received in a PDCCH Monitoring Occasion (MO) m, and $V_{C\text{-DAI},c,m}$ is the value of the C-DAI in DCI for a serving cell c received in the PDCCH monitoring occasion m. Both $V_{T\text{-DAI},m}$ and $V_{C\text{-DAI},c,m}$ are related to a number of bits of the DAI field in the DCI. MSB is the Most Significant Bit and LSB is the Least Significant Bit.

[Table 1]

| MSB, LSB of DAI Field | $V_{T\text{-DAI},m}$ or $V_{C\text{-DAI},c,m}$ or $V_{\text{T-DAI}}^{\text{UL}}$ | Y |
|---|---|---|
| 0,0 | 1 | $(Y - 1) \bmod 4 + 1 = 1$ |
| 0,1 | 2 | $(Y - 1) \bmod 4 + 1 = 2$ |
| 1,0 | 3 | $(Y - 1) \bmod 4 + 1 = 3$ |
| 1,1 | 4 | $(Y - 1) \bmod 4 + 1 = 4$ |

For example, when the C-DAI or T-DAI is 1, 5 or 9, as shown in Table 1, all of the DAI field are indicated with "00", and the value of $V_{T\text{-DAI},m}$ or $V_{C\text{-DAI},c,m}$ is represented as "1" by the equation in Table 1. Y may represent the value of the DAI corresponding to the number of DCIs actually transmitted by the base station (the value of the DAI before conversion by the equation in the table).

For example, in a case where the C-DAI or T-DAI in the DCI is 1 bit, values greater than 2 may be represented by equations in Table 2.

[Table 2]

| DAI field | $V_{T\text{-DAI},m}$ or $V_{C\text{-DAI},c,m}$ | Y |
|---|---|---|
| 0 | 1 | $(Y - 1) \bmod 2 + 1 = 1$ |
| 1 | 2 | $(Y - 1) \bmod 2 + 1 = 2$ |

It should be noted that, unless the context clearly indicates otherwise, all or one or more of the methods, steps or operations described in embodiments of the disclosure may be specified by protocol and/or configured by higher-level signaling and/or indicated by dynamic signaling. The dynamic signaling may be PDCCH and/or DCI and/or DCI format. For example, SPS PDSCH and/or CG PUSCH may be dynamically indicated in corresponding activated DCI/DCI format /PDCCH. All or one or more of the described methods, steps and operations may be optional. For example, if a certain parameter (e.g., parameter X) is configured, the UE performs a certain approach (e.g., approach A), otherwise (if the parameter, e.g., parameter X, is not configured), the UE performs another approach (e.g., approach B).

It should be noted that, a Primary Cell (PCell) or Primary Secondary Cell (PSCell) in embodiments of the disclosure may be used interchangeably with a Cell having a PUCCH.

It should be noted that, methods for downlink in embodiments of the disclosure may also be applicable to uplink, and methods for uplink may also be applicable to downlink. For example, a PDSCH may be replaced with a PUSCH, a SPS PDSCH may be replaced with a CG PUSCH, and downlink symbols may be replaced with uplink symbols, so that methods for downlink may be applicable to uplink.

It should be noted that, methods applicable to multiple PDSCH/PUSCH scheduling in embodiments of the disclosure may also be applicable to a PDSCH/PUSCH transmission with repetitions. For example, a PDSCH/PUSCH of multiple PDSCH/PUSCHs may be replaced by a repetition of multiple repetitions of the PDSCH/PUSCH transmission.

It should be noted that in methods of the disclosure, "configured and/or indicated with a transmission with repetitions" may be understood that the number of the repetitions of the transmission is greater than 1. For example, "configured and/or indicated with a transmission with repetitions" may be replaced with "PUCCH repeatedly transmitted on more than one slot/sub-slot". "Not configured and/or indicated with a transmission with repetitions" may be understood that the number of the repetitions of the transmission equals to 1. For example, "PUCCH that is not configured and/or indicated with repetitions" may be replaced by "PUCCH transmission with the number of the repetitions of 1". For example, the UE may be configured with a parameter $N_{\text{PUCCH}}^{\text{repeat}}$ related to the number of repetitions of PUCCH; When the parameter $N_{\text{PUCCH}}^{\text{repeat}}$ is greater than 1, it may mean that the UE is configured with a PUCCH transmission with repetitions, and the UE may repeat the PUCCH transmission on $N_{\text{PUCCH}}^{\text{repeat}}$ time units (e.g., slots); when the parameter is equal to 1, it may mean that the UE is not configured with a PUCCH transmission with repetitions. For example, the repeatedly transmitted PUCCH may include only one type of UCI. If the PUCCH is configured with repetitions, in embodiments of the disclosure, a repetition of the multiple repetitions of the PUCCH may be used as a PUCCH (or a PUCCH resource), or all of the repetitions of the PUCCH may be used as a PUCCH (or a PUCCH resource), or a specific repetition of the multiple repetitions of the PUCCH may be used as a PUCCH (or a PUCCH resource).

It should be noted that, in methods of the disclosure, a PDCCH and/or DCI and/or a DCI format schedules multiple PDSCHs/PUSCHs, which may be multiple PDSCHs/PUSCHs of a same serving cell and/or multiple PDSCHs/PUSCHs of different serving cells.

It should be noted that the multiple embodiments described in the disclosure may be combined in any order. In a combination, an embodiment may be performed one or more times.

It should be noted that multiple steps in the methods of the disclosure may be implemented in any order.

It should be noted that, in methods of the disclosure, "canceling a transmission" may mean canceling the transmission of the entire uplink channel and/or cancelling the transmission of a part of the uplink channel.

It should be noted that, in methods of the disclosure, "an order from small to large" (e.g., an ascending order) may be replaced by "an order from large to small" (e.g., a descending order), and/or "an order from large to small" (e.g., a descending order) may be replaced by "an order from small to large" (e.g., an ascending order).

It should be noted that, in methods of the disclosure, a PUCCH/PUSCH carrying A may be understood as a PUCCH/PUSCH only carrying A, and may also be understood as a PUCCH/PUSCH carrying at least A.

It should be noted that "slot" may be replaced by "subslot" or "time unit" in embodiments of the disclosure.

It should be noted that "at least one" in embodiments of the disclosure may be understood as "one" or "multiple". In the case of "multiple", any permutation and combination may be used. For example, at least one of A, B and C may be: A, B, C, AB, BA, ABC, CBA, ABCA, ABCCB, etc.

In some cases, in order to improve the reliability of a PUCCH transmission, the PUCCH transmission may be configured with repetitions.

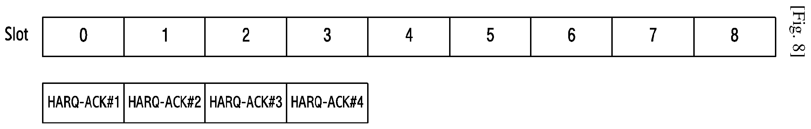

FIG. 8 illustrates a schematic diagram of uplink transmission collision according to an embodiment of the disclosure.

Referring to FIG. 8, the repetition of PUCCH of HARQ-ACK# 1 is in slots 0 to 3, and if the base station schedules HARQ-ACK#2 with a starting slot of one of slots 1 to 3, the transmission of HARQ-ACK#2 in slots 1 to 3 will be cancelled. Generally, the delay of HARQ-ACK for a dynamically scheduled PDSCH reception is large. Therefore, when a PUCCH transmission is with repetitions, how to determine the UCI priority is a problem to be resolved.

At least one of the following embodiments is adopted to determine the UCI priority.

[Embodiment 1]

In an embodiment 1, it may be specified by protocols that, when a PUCCH is with repetitions, the UCI priority is at least one of the following (or determined based on at least one of the following):

- HARQ-ACK indicated by a DCI format (e.g., HARQ-ACK for a PDSCH reception dynamically scheduled (e.g., a PDSCH reception scheduled by a DCI format)) > HARQ-ACK not indicated by a DCI format (e.g., HARQ-ACK only for SPS PDSCH reception(s)) > SR > CSI with higher priority > CSI with lower priority.

- HARQ-ACK for a PDSCH reception dynamically scheduled (e.g., a PDSCH reception scheduled by a DCI format) > HARQ-ACK only for SPS PDSCH reception(s).

- HARQ-ACK indicated by a DCI format (e.g., HARQ-ACK for a PDSCH reception dynamically scheduled (e.g., a PDSCH reception scheduled by a DCI format)) > HARQ-ACK not indicated by a DCI format (e.g., HARQ-ACK only for SPS PDSCH reception(s)) > positive SR > CSI with higher priority > CSI with lower priority.

- HARQ-ACK indicated by a DCI format (e.g., HARQ-ACK for a PDSCH reception dynamically scheduled (e.g., a PDSCH reception scheduled by a DCI format)) > HARQ-ACK not indicated by a DCI format (e.g., HARQ-ACK only for SPS PDSCH reception(s)) > positive SR.

- HARQ-ACK indicated by a DCI format (e.g., HARQ-ACK for a PDSCH reception dynamically scheduled (e.g., a PDSCH reception scheduled by a DCI format)) > HARQ-ACK not indicated by a DCI format (e.g., HARQ-ACK only for SPS PDSCH reception(s)) > positive SR > CSI with higher priority > CSI with lower priority > negative SR.

In an example, the UE does not multiplex different UCI types in a PUCCH transmission with repetitions over $N_{\mathrm{PUCCH}}^{\mathrm{repeat}} > 1$ slots. If the UE would transmit a first PUCCH over more than one slot and transmit at least a second PUCCH over one or more slots, and the transmissions of the first PUCCH and the second PUCCH would overlap in a number of slots then, for each slot of the multiple slots and the UCI type priority of HARQ-ACK for a PDSCH reception dynamically scheduled > HARQ-ACK only for SPS PDSCH reception(s) > SR > CSI with higher priority > CSI with lower priority:

- the UE does not expect the first PUCCH and any of the second PUCCHs to start at a same slot and include a UCI type with same priority; and/or

- if the first PUCCH and any of the second PUCCHs include a UCI type with same priority, the UE transmits the PUCCH starting at an earlier slot, and does not transmit the PUCCH starting at a later slot; and/or

- if the first PUCCH and any of the second PUCCHs do not include a UCI type with same priority, the UE transmits the PUCCH that includes the UCI type with higher priority, and does not transmit the PUCCH that includes the UCI type with lower priority.

It should be noted that if a PUCCH includes multiple types of UCI, the UCI type of the PUCCH may be determined as a UCI type with the highest priority among the multiple UCI types. Accordingly, "UCI type with same priority" may be understood as that the UCI type with the highest priority is the same.

It should be noted that the UCI type priority in this example may also be the UCI type priority defined in other embodiments of the disclosure.

The method may reduce the delay of HARQ-ACK for a dynamically scheduled PDSCH reception. For example, continuing to consider the example shown in FIG. 8, since HARQ-ACK#1 may be HARQ-ACK for a SPS PDSCH reception, and the SPS PDSCH may include no data, at this time, the base station already knows that the HARQ-ACK fed back by the UE is NACK before receiving HARQ-ACK# 1, and thus whether the UE feeds back HARQ-ACK#1 has no influence on the scheduling of the base station. Therefore, allowing HARQ-ACK by dynamical scheduling to cancel HARQ-ACK for SPS PDSCH reception(s) can improve the scheduling flexibility.

In some cases, for a TDD frequency band (e.g., an asymmetric frequency band), a PUCCH repetition (i.e., a repetition of a PUCCH transmission) may be cancelled (or deferred/delayed for transmission) by a semi-statically configured downlink symbol or a synchronization signal block (SSB)/physical broadcast channel (PBCH) in a slot. When the canceled (deferred) PUCCH repetition overlaps with other PUCCH and/or PUSCH in time domain, it is necessary to clarify UE behavior. Generally, when there is other conflict/collision among uplink and downlink channels (collision among an uplink channel and an uplink channel, collision among an uplink channel and a downlink channel, and/or collision among a downlink channel and a downlink channel), it is also necessary to clarify UE behavior. In embodiments of the disclosure, when there is channel collision (collision among an uplink channel and an uplink channel, and/or collision among an uplink channel and a downlink channel, and/or collision among a downlink channel and a downlink channel), resolving the channel collision may include determining physical channel(s) to be received and/or physical channel(s) to be transmitted from multiple channels so that the physical channel(s) to be received and/or the physical channel(s) to be transmitted do not collide (e.g., do not overlap), and/or the physical channel(s) to be received and/or the physical channel(s) to be transmitted do not collide (e.g., do not overlap) with a predefined symbol.

In some implementations, at least one of the following embodiments 2 to 4 may be adopted.

[Embodiment 2]

Embodiment 2may be performed according to one or more of the following steps (step 2-1 to step 2-3).

Step 2-1: the UE resolves collision among a PUCCH repetition and a first predefined symbol and/or the UE resolves collision among a PUSCH transmission and the first predefined symbol. For example, step 2-1 may include determining whether to transmit an uplink transmission (e.g., PUCCH repetition and/or PUSCH transmission) that collides with the first predefined symbol. As an example, if a PUCCH repetition overlaps with at least one of the first predefined symbols, the UE does not transmit the PUCCH repetition. Additionally or alternatively, if a PUCCH transmission overlaps with at least one of the first predefined symbols, the UE does not transmit this PUCCH transmission.

For example, the first predefined symbol may include at least one of the following:

- semi-statically configured (higher layer signaling configured) downlink symbol(s) (e.g., a downlink symbol configured by the 3GPP parameter tdd-UL-DL-ConfigurationCommon or tdd-UL-DL-ConfigurationDedicated);
- symbol(s) of an Synchronization Signal Block (SSB)/Physical broadcast channel (PBCH);
- symbol(s) of CORESET#0 which is a control resource set for at least system information block 1(SIB1) scheduling;
- unavailable symbol(s) configured by higher layer signaling;
- Y symbols after an SSB, where Y is an integer and may be specified by protocols and/or configured by higher layer signaling;
- downlink symbol(s) and/or flexible symbol(s) indicated by a DCI (e.g., DCI format 2_0).

Step 2-2: the UE multiplexes and/or prioritizes PUCCH(s) and/or PUSCH(s). For example, the PUCCH(s) and/or PUSCH(s) are multiplexed and/or prioritized according to a predetermined method (e.g., a method specified by protocols or specifications (such as TS 38.213)).

Step 2-3: the UE resolves collision among a PUCCH transmission and a second predefined symbol and/or UE resolves collision among a PUSCH transmission and the second predefined symbol. For example, step 2-3 may include determining whether to transmit an uplink transmission (PUCCH and/or PUSCH) that collides with the second predefined symbol. For example, the second predefined symbol may be the first predefined symbol described above. For another example, the second predefined symbol may be another symbol.

It should be noted that in the embodiments of the disclosure, the described steps are all optional. For example, one or more of the described steps may be omitted, or other steps may be added. Furthermore, the described steps may be performed in any order.

The method can improve the transmission probability of a PUCCH and/or PUSCH. For example, when a repetition of a PUCCH transmission carrying HARQ-ACK collides with the first predefined symbol and the PUCCH overlaps with another PUCCH carrying SR in time domain, according to this method, the repetition of the PUCCH transmission carrying HARQ-ACK may be cancelled, and the UE transmits the other PUCCH carrying SR.

[Embodiment 3]

Embodiment 3 may be performed according to the following steps.

Step 3-1: the UE resolves collision among a PUCCH repetition and the first predefined symbol, and/or the UE resolves collision among a PUSCH transmission and the first predefined symbol, and/or the UE resolves collision among a PDSCH and a third predefined symbol. Step 3-1 may include: determining whether to transmit (e.g., determining not to transmit) the PUCCH repetition that collides with the first predefined symbol; and/or determining whether to transmit (e.g., determining not to transmit) the PUSCH transmission that collides with the first predefined symbol; and/or determining whether to receive (e.g., determining not to receive) the PDSCH that collides with the third predefined symbol. For example, a PDSCH may be an SPS PDSCH, one of the PDSCH repetitions, or one PDSCH among the multiple PDSCHs scheduled by a DCI format.

For example, the third predefined symbol may be at least one of the following:

- uplink symbol(s) configured by higher layer signaling (e.g., the 3GPP parameter tdd-UL-DL-ConfigurationCommon or tdd-UL-DL-ConfigurationDedicated);
- flexible symbol(s) configured by higher layer signaling (e.g., the 3GPP parameter tdd-UL-DL-ConfigurationCommon or TDD-UL-DL-ConfigurationDedicated);
- uplink symbol(s) indicated by a DCI (e.g., DCI format 2_0);
- flexible symbol(s) indicated by a DCI (e.g., DCI format 2_0).

Step 3-2: the UE multiplexes and/or prioritizes PUCCH(s) and/or PUSCH(s). For example, the PUCCH(s) and/or PUSCH(s) may be multiplexed and/or prioritized according to a predefined method (e.g., a method specified by protocols such as TS 38.213).

Step 3-3: the UE resolves collision among a dynamically scheduled PDSCH and SPS PDSCH(s). For example, if a PDSCH scheduled by a PDCCH on a serving cell overlaps with SPS PDSCH(s) in time domain and the PDCCH and the SPS PDSCH(s) satisfy a specific timing relationship, the UE does not receive the SPS PDSCH(s).

Step 3-4: the UE resolves collision among PDSCH(s) and PUCCH(s) and/or PUSCH(s). For example, if a PDSCH scheduled by a DCI format on a serving cell overlaps with a PUCCH (or PUSCH) configured to be transmitted by higher layer signaling in time domain, the UE does not transmit the PUCCH (or PUSCH). For another example, if a PUCCH (or PUSCH) scheduled by a DCI format on a serving cell overlaps with a SPS PDSCH in time domain, the UE does not receive the SPS PDSCH.

Step 3-5: the UE resolves collision among a PUCCH transmission and the second predefined symbol and/or the UE resolves collision among a PUSCH transmission and the second predefined symbol.

It should be noted that the order of steps 3-2 and 3-3 may be changed, and/or the order of steps 3-3 and 3-4 may be changed.

The method can clarify the behavior of UE and improve the reliability of uplink transmission. Performing step 3-1 or step 3-4 before step 3-3 can improve the flexibility of downlink scheduling. If the reception of a SPS PDSCH is cancelled before step 3-1, the PDCCH that schedules the PDSCH and the SPS PDSCH do not need to satisfy the timing relationship.

It should be noted that this method can also be performed in the order of step 3-1, step 3-2, step 3-5, step 3-4, and step 3-3, or in the order of step 3-1, step 3-2, step 3-5, step 3-3 and step 3-4.

[Embodiment 4]

Embodiment 4 may be performed according to one or more of the following steps (step 4-1 to step 4-3).

Step 4-1: the UE resolves collision among PUCCH(s), PUSCH(s) and the first predefined symbol, for example, according to other embodiments of the disclosure.

Step 4-2: the UE resolves collision among multiple PDSCHs and the third predefined symbol, for example, according to other embodiments of the disclosure. For example, step 3-3 and step 3-1 in an embodiment 3 are performed, or step 3-1 and step 3-3 in an embodiment 3 are performed.

Step 4-3: the UE resolves collision among PUCCH(s), PUSCH(s) and PDSCH(s), for example, according to other embodiments of the disclosure. For example, the collision among PUCCH(s), PUSCH(s) and PDSCH(s) may be resolved by performing step 3-4 in an embodiment 3.

It should be noted that the order of step 4-1 and step 4-2 may be interchanged or combined into one step.

The method can clarify the behavior of UE and improve the reliability of uplink transmission.

In some cases, in order to improve the reliability of a PUCCH transmission, the PUCCH transmission may be configured with repetitions.

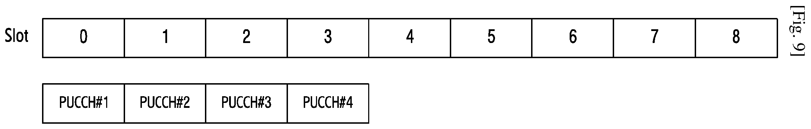

FIG. 9 illustrates a schematic diagram of uplink transmission collision according to an embodiment of the disclosure.

Referring to FIG. 9, repetitions of a PUCCH transmission are in slots 0 to 3. At this time, if a PUSCH scheduled by the base station overlaps with the PUCCH in time domain, the PUSCH transmission will be cancelled, and thus affecting the reliability of the PUSCH transmission.

To at least resolve this problem, when there is a PUCCH transmission with repetitions, at least one of the following embodiments may be adopted.

[Embodiment 5]

It may be specified by protocols that if a repetition of a PUCCH transmission includes at least one of first UCI types and a PUSCH overlaps with the repetition of the PUCCH transmission in time domain, the UE does not transmit the PUSCH and/or the UE transmits the PUCCH. Otherwise, the UE transmits the PUSCH and/or the UE does not transmit the PUCCH.

Additionally or alternatively, it may be specified by protocols that if a repetition of a PUCCH transmission includes at least one of second UCI types and a PUSCH overlaps with the repetition of the PUCCH transmission in time domain, the UE does not transmit the PUCCH and/or the UE transmits the PUSCH. Otherwise, the UE does not transmit the PUSCH and/or the UE transmits the PUCCH.

It should be noted that if a PUSCH transmission is configured with repetitions, the UE does not transmit the PUSCH may be understood as that the UE does not transmit all repetitions of the PUSCH transmission. Or, the UE does not transmit the PUSCH may be understood as that the UE does not transmit repetitions of the PUSCH transmission that overlap with the repetition of the PUCCH transmission.

For example, the first UCI type may be HARQ-ACK. The second UCI type may be SR and/or CSI. Or, the first UCI type may be HARQ-ACK indicated by a DCI format (e.g., HARQ-ACK for a PDSCH reception dynamically scheduled (e.g.,

a PDSCH reception scheduled by a DCI format)), and the second UCI type may be HARQ-ACK not indicated by a DCI format (e.g., HARQ-ACK only for SPS PDSCH reception(s)) and/or SR and/or CSI.

It should be noted that the PUSCH in embodiments of the disclosure may be a PUSCH scheduled by a DCI format and/or a CG PUSCH. The first UCI type and/or the second UCI type may be defined for the PUSCH scheduled by a DCI format and the CG PUSCH, respectively.

The method can improve the flexibility of the PUSCH scheduling and the reliability of the PUSCH transmission.

In some cases, a PUCCH transmission may be configured with repetitions. If a first PUCCH and any of second PUCCHs include a UCI type with same priority, the UE transmits the PUCCH starting at an earlier slot, but does not transmit the PUCCH starting at a later slot. Not transmitting the PUCCH starting at the later slot will affect the reliability of the UCI transmission.

In some implementations, at least one of the following embodiments (embodiment 6 to embodiment 11) may be adopted.

[Embodiment 6]

In an embodiment 6, UCIs (or PUCCHs) satisfying a first predefined condition may be multiplexed in a PUCCH.

For example, the first predefined condition may include at least one of the following:

- types of the UCIs are the same;
- the UCIs are of the same priority, for example, priorities of the UCIs may be determined according to other embodiments of the disclosure;
- the UCI type is the first UCI type;
- the UCI type is the second UCI type;
- time units (e.g., slots) where the PUCCHs actually start to be transmitted are the same;
- numbers of repetitions of PUCCH resources are the same;
- multiple PUCCHs overlap in time domain.

The method can improve the reliability of UCI transmission.

[Embodiment 7]

In an embodiment 7, it may be specified by protocols that the UE is not expected to multiplex more than one first PUCCH overlapping in time domain and all of which are not configured with repetitions in a second PUCCH configured with repetitions.

The method may reduce the implementation complexity of the UE.

[Embodiment 8]

In an embodiment 8, if more than one first PUCCH overlapping in time domain and not configured with repetitions is multiplexed in a second PUCCH configured with repetitions, the UE transmits the multiplexed UCI in the second PUCCH, in which the transmission of the second PUCCH is not with repetitions.

The method can avoid a PUCCH carrying a UCI with lower priority.

[Embodiment 9]

In an embodiment 9, if more than one first PUCCH overlapping in time domain and not configured with repetitions is multiplexed in a second PUCCH configured with repetitions, the UE transmits the PUCCH carrying a UCI with higher priority, and the UE does not transmit the PUCCH carrying a UCI with lower priority.

This method can improve the reliability for higher priority.

[Embodiment 10]

In an embodiment 10, if more than one first PUCCH carrying HARQ-ACK (e.g., repetitions of a PUCCH transmission with different starting times) is multiplexed in a second PUCCH, the HARQ-ACK in each first PUCCH is sorted in time order. For example, this method may be used for a semi-static HARQ-ACK codebook. For another example, if the UE is configured with a dynamic HARQ-ACK codebook, DAI may count separately for time units used to feed back HARQ-ACK. The UE generates a HARQ-ACK sub-codebook for each first PUCCH, and the UE sorts the HARQ-ACK in each first PUCCH in time order and transmits it on the second PUCCH.

The method may reduce the implementation complexity of the base station and the UE.

[Embodiment 11]

In an embodiment 11, if a first PUCCH carrying HARQ-ACK in a first time unit (e.g., repetitions of a PUCCH transmission with different starting times) is deferred to a second time unit and the UE is configured with a dynamic HARQ-ACK codebook, DAI corresponding to the HARQ-ACK codebook of the second time unit may jointly counts (or continuously counts). For example, the first PDCCH scheduled by the base station indicates that HARQ-ACK is fed back in the first time unit, and C-DAI is 1. The second PDCCH scheduled by the base station indicates that HARQ-ACK is fed back in the second time unit, and the C-DAI is 2.

The method can help to find missing detection of DCI. If the UE has not received the first PDCCH, the UE may find the missing detection of the first PDCCH according to the second PDCCH, which can improve the reliability of the HARQ-ACK codebook.

In some cases, the UE may be configured with two physical layer priorities. When PUCCHs and/or PUSCHs with higher priority overlap in time domain, it is necessary to define a timing condition between a DCI scheduling the PUCCH and the PUCCH and/or PUSCH. For example, the timing condition may be that an interval between the end position (or symbol) of the PDCCH scheduling the PUCCH and the starting position (or symbol) of the earliest PUCCH or PUSCH in a set of PUCCHs and/or PUSCHs overlapping in time domain is not less than a predefined time T1.

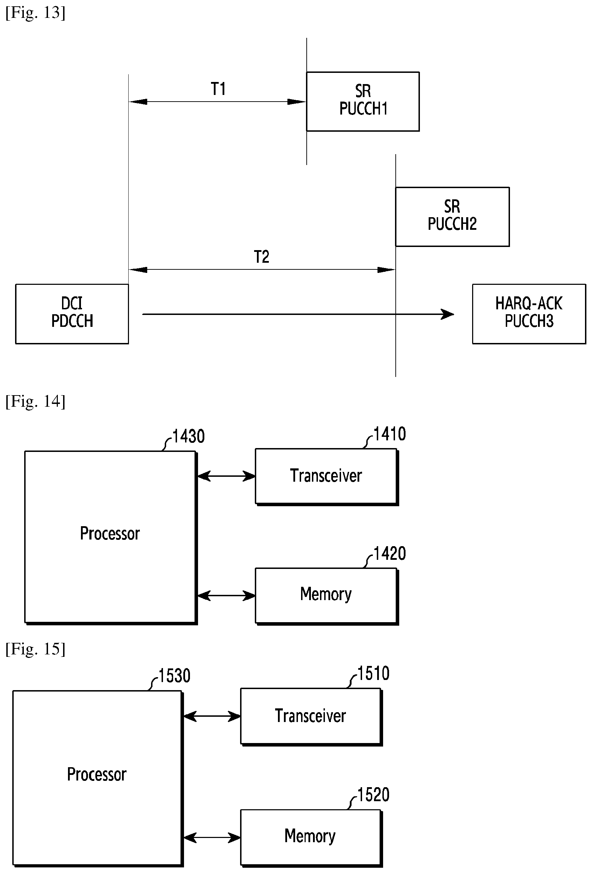

FIG. 13 illustrates a schematic diagram of timing conditions according to an embodiment of the disclosure.

Referring to FIG. 13, the PDCCH carrying the DCI indicates that the HARQ-ACK is transmitted on PUCCH3, and a set of overlapping PUCCHs includes PUCCH1, PUCCH2 and PUCCH3. The interval between the end position (or symbol) of the PDCCH and the starting position (or symbol) of PUCCH1 is not less than the predefined time T 1. For services with higher priority, the timing condition will lead to the increase of time domain. If the timing relationship cannot be satisfied, the base station cannot schedule the PUCCH3, and can only schedule a PUCCH that satisfies the timing condition. In order to reduce the delay, embodiment 12 may be adopted.

[Embodiment 12]

In an embodiment 12, it may be configured by protocols and/or higher layer signaling that, for a PUCCH with higher priority, an interval between the end position (or symbol) of a PDCCH scheduling HARQ-ACK (or PUCCH carrying HARQ-ACK) and the starting position (or symbol) of the earliest PUCCH or PUSCH in a set of PUCCHs and/or PUSCHs overlapping in time domain except for a PUCCH carrying SR that does not overlap with the PUCCH carrying HARQ-ACK in time domain is not less than a predefined time T2. That is, in FIGS. 3A and 3B, the PDCCH and PUCCH1 do not need to satisfy the timing condition.

It should be noted that the timing condition specified in this method may be used to cancel the transmission of a PUCCH or PUSCH with lower priority. For PUCCHs with higher priority overlapping in time domain, only a PDCCH scheduling HARQ-ACK and the PUCCH carrying SR that overlaps with the PUCCH carrying the HARQ-ACK in time domain needs to satisfy the timing relationship, and the PDCCH and the PUCCH carrying SR that does not overlap with PUCCH carrying HARQ-ACK in time domain does not need to satisfy the timing relationship.

The method can improve the scheduling flexibility and reduce the delay of HARQ-ACK.

FIG. 10 illustrates a flowchart of a method 1000 performed by a terminal (e.g., UE) according to an embodiment of the disclosure.

Referring to FIG. 10, in operation S 1010, a downlink signal is received based on one or more downlink channels, and/or an uplink signal is transmitted based on one or more uplink channels.

The one or more uplink channels include a physical uplink control channel (PUCCH) with repetitions. The transmitting of the uplink signal based on the one or more uplink channels includes determining a priority of one or more uplink control information (UCIs) in the PUCCH with repetitions and transmitting the PUCCH with repetitions based on the determined priority of the one or more UCIs.

In some examples, the one or more UCIs includes one or more of: hybrid automatic repeat request-acknowledgement (HARQ-ACK) indicated by a downlink control information (DCI) format, HARQ-ACK not indicated by a DCI format, scheduling request (SR), positive SR, channel state information (CSI) with a first priority or CSI with a second priority, and the priority of the one or more UCIs is determined as at least one of the following:

- {HARQ-ACK indicated by a downlink control information (DCI) format, HARQ-ACK not indicated by a DCI format, SR, CSI with the first priority, CSI with the second priority}, in a priority order from high to low;
- {HARQ-ACK indicated by a DCI format, HARQ-ACK not indicated by a DCI format, positive SR, CSI with the first priority, CSI with the second priority}, in a priority order from high to low;
- {HARQ-ACK indicated by a DCI format, HARQ-ACK not indicated by a DCI format, positive SR}, in a priority order from high to low; or

- {HARQ-ACK indicated by a DCI format, HARQ-ACK not indicated by a DCI format, positive SR, CSI with the first priority, CSI with the second priority, negative SR}, in a priority order from high to low.

In some sub-examples, the first priority is higher than the second priority.

In some implementations, for example, the transmitting of the uplink signal based on the one or more uplink channels, and/or the receiving of the downlink signal based on the one or more downlink channels includes at least one of:

- resolving collision among PUCCHs with repetitions from the one or more uplink channels and the first predefined symbol, and/or resolving collision among physical uplink shared channels (PUSCHs) from the one or more uplink channels and the first predefined symbol;
- multiplexing and/or prioritizing PUCCHs and/or PUSCHs from the one or more uplink channels; or
- resolving collision among PUCCHs and/or PUSCHs from the one or more uplink channels and a second predefined symbol.

In some implementations, for example, the transmitting of the uplink signal based on the one or more uplink channels, and/or the receiving of the downlink signal based on the one or more downlink channels includes at least one of the following:

- resolving collision among PUCCHs with repetitions from the one or more uplink channels and a first predefined symbol, and/or resolving collision among PUSCHs from the one or more uplink channels and the first predefined symbol, and/or resolving collision among PDSCHs from the one or more downlink channels and a third predefined symbol;
- multiplexing and/or prioritizing PUCCHs and/or PUSCHs from the one or more uplink channels;
- resolving collision among dynamically scheduled PDSCHs from the one or more downlink channels and semi-persistently scheduled (SPS) PDSCHs from the one or more downlink channels;
- resolving collision among PDSCHs from the one or more downlink channels and PUSCHs and/or PUSCHs from the one or more uplink channels; or
- resolving collision among PUCCHs from the one or more uplink channels and a second predefined symbol, and/or resolving collision among PUSCHs from the one or more uplink channels and the second predefined symbol.

In some implementations, for example, the transmitting of the uplink signal based on the one or more uplink channels, and/or the receiving of the downlink signal based on the one or more downlink channels includes at least one of the following:

- resolving collision among PUCCHs and PUSCHs from the one or more uplink channels and a first predefined symbol;
- resolving collision among multiple PDSCHs from the one or more downlink channels and a third predefined symbol; or
- resolving collision among PUCCHs and PUSCHs from the one or more uplink channels and PDSCHs from the one or more downlink channels.

In some implementations, for example, the first predefined symbol or the second predefined symbol includes at least one of the following:

- a downlink symbol configured by higher layer signaling;
- a symbol of a synchronization signal block (SSB)/physical broadcast channel (PBCH);
- a symbol of a control resource set for at least system information block 1 (SIB1) scheduling;
- an unavailable symbol configured by higher layer signaling;
- Y symbols after an SSB, where Y is an integer; or
- a downlink symbol and/or flexible symbol indicated by a DCI format.

In some implementations, for example, the third predefined symbol includes at least one of the following:

- an uplink symbol configured by higher layer signaling;
- a flexible symbol configured by higher layer signaling;
- an uplink symbol indicated by a DCI format; or
- a flexible symbol indicated by a DCI format.

In some implementations, for example, the transmitting of the uplink signal based on one or more uplink channels includes at least one of the following:

- in case that a PUCCH with repetitions from the one or more uplink channels includes at least one of one or more first UCI types and a PUSCH from the one or more uplink channels overlaps with the PUCCH with repetitions in time domain, not transmitting the PUSCH and/or transmitting the PUCCH with repetitions; or
- in case that a PUCCH with repetitions from the one or more uplink channels includes at least one of one or more second UCI types and a PUSCH from the one or more uplink channels overlaps with the PUCCH with repetitions in time domain, not transmitting the PUCCH with repetitions and/or transmitting the PUSCH.

In some examples, the one or more first UCI types include HARQ-ACK indicated by a DCI format, and the one or more second UCI types include HARQ-ACK not indicated by a DCI format, SR, or CSI.

In some implementations, the method 1000 may include transmitting the uplink signal or receiving the downlink signal based on operations in one or more of the above-described embodiments (e.g., embodiment 1 to embodiment 11).

In some implementations, the method 1000 may include the methods or operations that may be performed by a terminal (e.g., UE) in various embodiments described above.

FIG. 11 illustrates a block diagram of a first transceiving node 1100 according to an embodiment of the disclosure.

Referring to FIG. 11, the first transceiving node 1100 may include a transceiver 1101 and a controller 1102.

The transceiver 1101 may be configured to transmit first data and/or first control signaling to a second transceiving node and receive second data and/or second control signaling from the second transceiving node in a time unit.

The controller 1102 may be an application specific integrated circuit or at least one processor. The controller 1102 may be configured to control the overall operation of the first transceiving node, including controlling the transceiver 1101 to transmit the first data and/or the first control signaling to the second transceiving node and to receive the second data and/or the second control signaling from the second transceiving node in a time unit.

In some implementations, the controller 1102 may be configured to perform one or more operations in the methods of various embodiments described above.

In the following description, the first transceiving node is illustrated by taking the base station as an example (but not limited to), and the second transceiving node is illustrated by taking the UE as an example (but not limited to). The first data and/or the first control signaling is illustrated by taking downlink data and/or downlink control signaling as an example (but not limited to). A HARQ-ACK codebook may be included in the second control signaling, which is illustrated by taking uplink control signaling as an example (but not limited to).

FIG. 12 illustrates a flowchart of a method 1200 performed by a base station according to an embodiment of the disclosure.

Referring to FIG. 12, in operation S1210, the base station transmits downlink data and/or downlink control information.

In operation S1220, the base station receives second data and/or second control line information from a UE in a time unit.

For example, the method 1200 may include one or more of the operations performed by the base station described in various embodiments of the disclosure.

FIG. 14 illustrates a block diagram of a terminal (or a user equipment (UE)), according to an embodiment of the disclosure.

Referring to FIG. 14, a terminal according to an embodiment includes a transceiver 1410, a memory 1420, and a processor (or a controller) 1430. The transceiver 1410, the memory 1420, and the processor (or controller) 1430 of the terminal operate according to a communication method of the terminal described above. However, the components of the terminal are not limited thereto. For example, the terminal may include more or fewer components than those described in FIG. 14. In addition, the processor (or controller) 1430, the transceiver 1410, and the memory 1420 may be implemented as a single chip. Also, the processor (or controller) 1430 may include at least one processor.

The transceiver 1410 collectively refers to a terminal station receiver and a terminal transmitter, and transmits/receives a signal to/from a base station or another terminal. The signal transmitted or received to or from the terminal may include control information and data. The transceiver 1410 may include a RF transmitter for up-converting and amplifying a frequency of a transmitted signal, and a RF receiver for amplifying low-noise and down-converting a frequency of a received signal. However, this is only an example of the transceiver 1410 and components of the transceiver 1410 are not limited to the RF transmitter and the RF receiver.

Also, the transceiver 1410 may receive and output, to the processor (or controller) 1430, a signal through a wireless channel, and transmit a signal output from the processor (or controller) 1430 through the wireless channel.

The memory 1420 stores a program and data required for operations of the terminal. Also, the memory 1420 may store control information or data included in a signal obtained by the terminal. The memory 1420 may be a storage medium, such as read-only memory (ROM), random access memory (RAM), a hard disk, a CD-ROM, and a DVD, or a combination of storage media.

The processor (or controller) 1430 may control a series of processes such that the terminal operates as described above. For example, the processor (or controller) 1430 may receive a data signal and/or a control signal, and the processor (or controller) 1430 may determine a result of receiving the signal transmitted by the base station and/or the other terminal.

FIG. 15 illustrates a block diagram of a base station, according to an embodiment of the disclosure.

Referring to FIG. 15 is, the base station of the disclosure includes a transceiver 1510, a memory 1520, and a processor (or, a controller) 1530. The transceiver 1510, the memory 1520, and the processor (or controller) 1530 of the base station operate according to a communication method of the base station described above. However, the components of the base station are not limited thereto. For example, the base station may include more or fewer components than those described in FIG. 15. In addition, the processor (or controller)1330, the transceiver 1510, and the memory 1520 may be implemented as a single chip. Also, the processor (or controller)1330 may include at least one processor.

The transceiver 1510 collectively refers to a base station receiver and a base station transmitter, and transmits/receives a signal to/from a terminal, another base station, and/or a core network function(s) (or entity(s)). The signal transmitted or received to or from the base station may include control information and data. The transceiver 1510 may include a RF transmitter for up-converting and amplifying a frequency of a transmitted signal, and a RF receiver for amplifying low-noise and down-converting a frequency of a received signal. However, this is only an example of the transceiver 1510 and components of the transceiver 1510 are not limited to the RF transmitter and the RF receiver.

Also, the transceiver 1510 may receive and output, to the processor (or controller) 1530, a signal through a wireless channel, and transmit a signal output from the processor (or controller) 1530 through the wireless channel.

The memory 1520 stores a program and data required for operations of the base station. Also, the memory 1520 may store control information or data included in a signal obtained by the base station. The memory 1520 may be a storage medium, such as ROM, RAM, a hard disk, a CD-ROM, and a DVD, or a combination of storage media.

The processor (or controller) 1530 may control a series of processes such that the base station operates as described above. For example, the processor (or controller) 1530 may receive a data signal and/or a control signal, and the processor (or controller) 1530 may determine a result of receiving the signal transmitted by the terminal and/or the core network function.

The methods according to the embodiments described in the claims or the detailed description of the disclosure may be implemented in hardware, software, or a combination of hardware and software.

When the electrical structures and methods are implemented in software, a computer-readable recording medium having one or more programs (software modules) recorded thereon may be provided. The one or more programs recorded on the computer-readable recording medium are configured to be executable by one or more processors in an electronic device. The one or more programs include instructions to execute the methods according to the embodiments described in the claims or the detailed description of the disclosure.

The programs (e.g., software modules or software) may be stored in random access memory (RAM), non-volatile memory including flash memory, read-only memory (ROM), electrically erasable programmable read-only memory (EEPROM), a magnetic disc storage device, compact disc-ROM (CD-ROM), a digital versatile disc (DVD), another type of optical storage device, or a magnetic cassette. Alternatively, the programs may be stored in a memory system including a combination of some or all of the above-mentioned memory devices. In addition, each memory device may be included by a plural number.

The programs may also be stored in an attachable storage device which is accessible through a communication network such as the Internet, an intranet, a local area network (LAN), a wireless LAN (WLAN), or a storage area network (SAN), or a combination thereof. The storage device may be connected through an external port to an apparatus according the embodiments of the disclosure. Another storage device on the communication network may also be connected to the apparatus performing the embodiments of the disclosure.

In the afore-described embodiments of the disclosure, elements included in the disclosure are expressed in a singular or plural form according to the embodiments. However, the singular or plural form is appropriately selected for convenience of explanation and the disclosure is not limited thereto. As such, an element expressed in a plural form may also be configured as a single element, and an element expressed in a singular form may also be configured as plural elements.

Although the figures illustrate different examples of user equipment, various changes may be made to the figures. For example, the user equipment can include any number of each component in any suitable arrangement. In general, the figures do not limit the scope of this disclosure to any particular configuration(s). Moreover, while figures illustrate operational environments in which various user equipment features disclosed in this patent document can be used, these features can be used in any other suitable system.

Those skilled in the art will understand that the above illustrative embodiments are described herein and are not intended to be limiting. It should be understood that any two or more of the embodiments disclosed herein may be combined in any combination. Furthermore, other embodiments may be utilized and other changes may be made without departing from the scope of the subject matter presented herein. It will be readily understood that aspects of the disclosure as generally described herein and shown in the drawings may be arranged, replaced, combined, separated and designed in various different configurations, all of which are contemplated herein.

Those skilled in the art will understand that the various illustrative logical blocks, modules, circuits, and steps described in this application may be implemented as hardware, software, or a combination of both. To clearly illustrate this interchangeability between hardware and software, various illustrative components, blocks, modules, circuits, and steps are generally described above in the form of their functional sets. Whether such function sets are implemented as hardware or software depends on the specific application and the design constraints imposed on the overall system. Technicians may implement the described functional sets in different ways for each specific application, but such design decisions should not be interpreted as causing a departure from the scope of this application.

The various illustrative logic blocks, modules, and circuits described in this application may be implemented or performed by a general purpose processor, a Digital Signal Processor (DSP), an Application Specific Integrated Circuit (ASIC), a Field Programmable Gate Array (FPGA) or other programmable logic devices, discrete gates or transistor logics, discrete hardware components, or any combination thereof designed to perform the functions described herein. The general purpose processor may be a microprocessor, but in an alternative, the processor may be any conventional processor, controller, microcontroller, or state machine. The processor may also be implemented as a combination of computing devices, such as a combination of a DSP and a microprocessor, a plurality of microprocessors, one or more microprocessors cooperating with a DSP core, or any other such configuration.

The steps of the method or algorithm described in this application may be embodied directly in hardware, in a software module executed by a processor, or in a combination thereof. The software module may reside in RAM memory, flash memory, ROM memory, EPROM memory, EEPROM memory, register, hard disk, removable disk, or any other form of storage medium known in the art. A storage medium is coupled to a processor to enable the processor to read and write information from/to the storage media. In an alternative, the storage medium may be integrated into the processor. The processor and the storage medium may reside in an ASIC. The ASIC may reside in a user terminal. In an alternative, the processor and the storage medium may reside in the user terminal as discrete components.

In one or more designs, the functions may be implemented in hardware, software, firmware, or any combination thereof. If implemented in software, each function may be stored as one or more pieces of instructions or codes on a computer-readable medium or delivered through it. The computer-readable medium includes both a computer storage medium and a communication medium, the latter including any medium that facilitates the transfer of computer programs from one place to another. The storage medium may be any available medium that may be accessed by a general purpose or special purpose computer.

The above flowchart illustrates example methods that can be implemented in accordance with the principles of the disclosure and various changes could be made to the methods illustrated in the flowcharts herein. For example, while shown as a series of operations, various operations in each figure could overlap, occur in parallel, occur in a different order, or occur multiple times. In another example, operations may be omitted or replaced by other operations.

While the disclosure has been shown and described with reference to various embodiments thereof, it will be understood by those skilled in the art that various changes in form and details may be made therein without departing from the scope of the disclosure as defined by the appended claims.

## Claims

1. A method (1000) performed by a user equipment, UE, the method (1000) comprising:

   receiving (S1010) a downlink signal based on one or more downlink channels;
   identifying a priority of one or more uplink control information, UCI; and
   transmitting (S1010) an uplink signal including the one or more UCI based on one or more uplink channels,
   wherein the one or more uplink channels include a physical uplink control channel, PUCCH, with repetitions, and the PUCCH with repetitions is transmitted based on the identified priority of the one or more UCI, and
   wherein the priority of the one or more UCI is identified as: hybrid automatic repeat request-acknowledgement, HARQ-ACK, indicated by a downlink control information, DCI, format, HARQ-ACK not indicated by the DCI format, positive scheduling request, SR, channel state information, CSI, with a first priority, CSI with a second priority, and negative SR, in an order from higher priority to lower priority.

2. The method according to claim 1,
   wherein the first priority is higher than the second priority.

3. The method according to claim 1,

wherein the transmitting of the uplink signal based on the one or more uplink channels includes at least one of:

resolving collision between PUCCHs with repetitions from the one or more uplink channels and a first predefined symbol, and resolving collision between physical uplink shared channels, PUSCHs, from the one or more uplink channels and the first predefined symbol,
multiplexing and prioritizing the PUCCHs and the PUSCHs from the one or more uplink channels, or
resolving collision between the PUCCHs and the PUSCHs from the one or more uplink channels and a second predefined symbol,
wherein the first predefined symbol or the second predefined symbol includes at least one of:

a downlink symbol configured by higher layer signaling;
a symbol of a synchronization signal block, SSB, and physical broadcast channel, PBCH;
a symbol of a control resource set for system information block 1, SIB1, scheduling;
an unavailable symbol configured by higher layer signaling;
Y symbols after an SSB, where Y is an integer; or
a downlink symbol and flexible symbol indicated by a DCI format.

4. The method according to claim 1,

wherein the transmitting of the uplink signal based on one or more uplink channels, and
wherein the receiving of the downlink signal based on the one or more downlink channels includes at least one of:

resolving collision between PUCCHs with repetitions from the one or more uplink channels and a first predefined symbol, and resolving collision between PUSCHs from the one or more uplink channels and the first predefined symbol, and resolving collision between physical downlink shared channels, PDSCHs, from the one or more downlink channels and a third predefined symbol,
multiplexing and prioritizing the PUCCHs and the PUSCHs from the one or more uplink channels,
resolving collision between dynamically scheduled PDSCHs from the one or more downlink channels and semi-persistently scheduling, SPS, PDSCHs from the one or more downlink channels,
resolving collision between the PDSCHs from the one or more downlink channels and the PUCCHs and the PUSCHs from the one or more uplink channels, or
resolving collision between the PUCCHs from the one or more uplink channels and a second predefined symbol, and resolving collision between the PUSCHs from the one or more uplink channels and the second predefined symbol,
wherein the third predefined symbol includes at least one of:

an uplink symbol configured by higher layer signaling;
a flexible symbol configured by higher layer signaling;
an uplink symbol indicated by a DCI format; or
a flexible symbol indicated by a DCI format.

5. A user equipment, UE, comprising:

at least one transceiver (1410);
at least one processor (1430) communicatively coupled to the at least one transceiver (1410); and
at least one memory (1420), communicatively coupled to the at least one processor (1430), storing instructions executable by the at least one processor (1430) individually or in any combination to cause the UE to:

receive a downlink signal based on one or more downlink channels,
identifying a priority of one or more uplink control information, UCI, and
transmit an uplink signal including the one or more UCI based on one or more uplink channels,
wherein the one or more uplink channels include a physical uplink control channel, PUCCH, with repetitions, and the PUCCH with repetitions is transmitted based on the identified priority of the one or more UCI, and
wherein the priority of the one or more UCI is identified as: hybrid automatic repeat request-acknowledgement, HARQ-ACK, indicated by a downlink control information, DCI, format, HARQ-ACK not indicated by the DCI format, positive scheduling request, SR, channel state information, CSI, with a first priority, CSI with a second priority, and negative SR, in an order from higher priority to lower priority.

6. The UE according to claim 5,
wherein the first priority is higher than the second priority.

7. The UE according to claim 5, wherein the instructions further cause the UE to:

resolve collision between PUCCHs with repetitions from the one or more uplink channels and a first predefined symbol, and resolve collision between physical uplink shared channels, PUSCHs, from the one or more uplink channels and the first predefined symbol;
multiplex and prioritize the PUCCHs and the PUSCHs from the one or more uplink channels; or
resolve collision between the PUCCHs and the PUSCHs from the one or more uplink channels and a second predefined symbol.

8. The UE according to claim 5, wherein the instructions further cause the UE to:

resolve collision between PUCCHs with repetitions from the one or more uplink channels and a first predefined symbol, and resolve collision between PUSCHs from the one or more uplink channels and the first predefined symbol, and resolve collision between physical downlink shared channels, PDSCHs, from the one or more downlink channels and a third predefined symbol;
multiplex and prioritize the PUCCHs and the PUSCHs from the one or more uplink channels;
resolve collision between dynamically scheduled PDSCHs from the one or more downlink channels and semi-persistently scheduling, SPS, PDSCHs from the one or more downlink channels;
resolve collision between the PDSCHs from the one or more downlink channels and the PUCCHs and the PUSCHs from the one or more uplink channels; or
resolve collision between the PUCCHs from the one or more uplink channels and a second predefined symbol, and resolve collision between the PUSCHs from the one or more uplink channels and the second predefined symbol.

9. A method performed by a base station, the method comprising:

transmitting a downlink signal based on one or more downlink channels; and
receiving an uplink signal including one or more uplink control information, UCI, based on one or more uplink channels,
identifying a priority of the one or more UCI,
wherein the one or more uplink channels include a physical uplink control channel, PUCCH, with repetitions, and the PUCCH with repetitions is received based on the identified priority of the one or more UCI, and
wherein the priority of the one or more UCI is identified as: hybrid automatic repeat request-acknowledgement, HARQ-ACK, indicated by a downlink control information, DCI, format, HARQ-ACK not indicated by the DCI format, positive scheduling request, SR, channel state information, CSI, with a first priority, CSI with a second priority, and negative SR, ssbesds= in an order from higher priority to lower priority.

10. The method according to claim 9,
wherein the first priority is higher than the second priority.

11. The method according to claim 9, wherein the receiving of the uplink signal based on the one or more uplink channels, and the transmitting of the downlink signal based on the one or more downlink channels include at least one of:

resolving collision between PUCCHs with repetitions and physical uplink shared channels, PUSCHs, from the one or more uplink channels and a first predefined symbol;
resolving collision between physical downlink shared channels, PDSCHs, from the one or more downlink channels and a third predefined symbol; or
resolving collision between the PUCCHs and the PUSCHs from the one or more uplink channels and the PDSCHs from the one or more downlink channels.

12. A base station comprising:

at least one transceiver (1510);
at least one processor (1530) communicatively coupled to the at least one transceiver (1510); and
at least one memory, communicatively coupled to the at least one processor (1530), storing instructions executable by the at least one processor (1530) individually or in any combination to cause the base station to:

transmit a downlink signal based on one or more downlink channels, and
receive an uplink signal including one or more uplink control information, UCI, based on one or more uplink channels,
identifying a priority of the one or more UCI,
wherein the one or more uplink channels include a physical uplink control channel, PUCCH, with repetitions, and the PUCCH with repetitions is received based on the identified priority of the one or more UCI, and
wherein the priority of the one or more UCI is identified as: hybrid automatic repeat request-acknowledgement, HARQ-ACK, indicated by a downlink control information, DCI, format, HARQ-ACK not indicated by the DCI format, positive scheduling request, SR, channel state information, CSI, with a first priority, CSI with a second priority, and negative SR, ssbesds= in an order from higher priority to lower priority.

13. The base station according to claim 12,
wherein the first priority is higher than the second priority.

14. The base station according to claim 12, wherein the instructions further cause the UE to:

resolve collision between PUCCHs with repetitions and physical uplink shared channels, PUSCHs, from the one or more uplink channels and a first predefined symbol;
resolve collision between physical downlink shared channels, PDSCHs, from the one or more downlink channels and a third predefined symbol; or
resolve collision between the PUCCHs and the PUSCHs from the one or more uplink channels and the PDSCHs from the one or more downlink channels.

## Patentansprüche

1. Verfahren (1000), das von einem Benutzergerät (kurz: UE) durchgeführt wird, wobei das Verfahren (1000) Folgendes umfasst:

Empfangen (S1010) eines Downlink-Signals basierend auf einem oder mehreren Downlink-Kanälen;
Identifizieren einer Priorität einer oder mehrerer Uplink-Steuerinformationen (kurz: UCI); und
Senden (S1010) eines Uplink-Signals, das die eine oder die mehreren UCI enthält, auf der Grundlage eines oder mehrerer Uplink-Kanäle,
wobei der eine oder die mehreren Uplink-Kanäle einen physikalischen Uplink-Steuerkanal (kurz: PUCCH) mit Wiederholungen umfassen und der PUCCH mit Wiederholungen auf der Grundlage der identifizierten Priorität der einen oder der mehreren UCI gesendet wird, und
wobei die Priorität der einen oder der mehreren UCI identifiziert wird als: hybride automatische Wiederholungsanforderungs-Bestätigung (kurz: HARQ-ACK), angegeben durch ein Downlink-Steuerungsinformationsformat (kurz: DCI-Format), HARQ-ACK, nicht angegeben durch das DCI-Format, positive Scheduling-Anforderung (kurz: SR), Kanalzustandsinformation (kurz: CSI) mit einer ersten Priorität, CSI mit einer zweiten Priorität und negative SR, in einer Reihenfolge von höherer Priorität zu niedrigerer Priorität.

2. Verfahren nach Anspruch 1,
wobei die erste Priorität höher ist als die zweite Priorität.

3. Verfahren nach Anspruch 1,
wobei das Senden des Uplink-Signals auf der Grundlage des einen oder der mehreren Uplink-Kanäle mindestens eines von Folgendem umfasst:

Auflösen von Kollisionen zwischen PUCCHs mit Wiederholungen aus dem einen oder den mehreren Uplink-Kanälen und einem ersten vordefinierten Symbol, und Auflösen von Kollisionen zwischen physikalischen Uplink-Shared-Kanälen (kurz: PUSCHs) aus dem einen oder den mehreren Uplink-Kanälen und dem ersten vordefinierten Symbol,
Multiplexen und Priorisieren der PUCCHs und der PUSCHs aus dem einen oder den mehreren Uplink-Kanälen und
Auflösen von Kollisionen zwischen den PUCCHs und den PUSCHs aus dem einen oder den mehreren Uplink-Kanälen und einem zweiten vordefinierten Symbol,
wobei das erste vordefinierte Symbol oder das zweite vordefinierte Symbol mindestens eines von Folgendem umfasst:

    ein Downlink-Symbol, das durch Signalisierung einer höheren Schicht konfiguriert ist;
    ein Symbol eines Synchronisationssignalblocks (kurz: SSB) und eines physikalischen Rundfunkkanals (kurz: PBCH);
    ein Symbol eines Steuerressourcensatzes für die Planung eines Systeminformationsblocks 1 (kurz: SIB1);
    ein nicht verfügbares Symbol, das durch Signalisierung einer höheren Schicht konfiguriert ist;
    Y Symbole nach einem SSB, wobei Y eine ganze Zahl ist; und
    ein Downlink-Symbol und ein flexibles Symbol, die durch ein DCI-Format angegeben sind.

**4.** Verfahren nach Anspruch 1,

wobei das Senden des Uplink-Signals auf der Grundlage eines oder mehrerer Uplink-Kanäle und
das Empfangen des Downlink-Signals auf der Grundlage des einen oder der mehreren Downlink-Kanäle mindestens eines von Folgendem umfasst:

    Auflösen von Kollisionen zwischen PUCCHs mit Wiederholungen aus dem einen oder den mehreren Uplink-Kanälen und einem ersten vordefinierten Symbol, und Auflösen von Kollisionen zwischen PUSCHs aus dem einen oder den mehreren Uplink-Kanälen und dem ersten vordefinierten Symbol, und Auflösen von Kollisionen zwischen physikalischen Downlink-Shared-Kanälen (kurz: PDSCHs) aus dem einen oder den mehreren Downlink-Kanälen und einem dritten vordefinierten Symbol,
    Multiplexen und Priorisieren der PUCCHs und der PUSCHs aus dem einen oder den mehreren Uplink-Kanälen,
    Auflösen von Kollisionen zwischen dynamisch geplanten PDSCHs aus dem einen oder den mehreren Downlink-Kanälen und semi-persistent geplanten PDSCHs (kurz: SPS PDSCHs) aus dem einen oder den mehreren Downlink-Kanälen,
    Auflösen von Kollisionen zwischen den PDSCHs aus dem einen oder den mehreren Downlink-Kanälen und den PUCCHs und den PUSCHs aus dem einen oder den mehreren Uplink-Kanälen und
    Auflösen von Kollisionen zwischen den PUCCHs aus dem einen oder den mehreren Uplink-Kanälen und einem zweiten vordefinierten Symbol, und Auflösen von Kollisionen zwischen den PUSCHs aus dem einen oder den mehreren Uplink-Kanälen und dem zweiten vordefinierten Symbol,
    wobei das dritte vordefinierte Symbol mindestens eines von Folgendem umfasst:

        ein durch Signalisierung einer höheren Schicht konfiguriertes Uplink-Symbol;
        ein flexibles Symbol, das durch Signalisierung einer höheren Schicht konfiguriert ist;
        ein Uplink-Symbol, das durch ein DCI-Format angegeben ist; und
        ein flexibles Symbol, das durch ein DCI-Format angegeben ist.

**5.** Benutzergerät (kurz: UE), umfassend:

    mindestens einen Transceiver (1410);
    mindestens einen Prozessor (1430), der mit dem mindestens einen Transceiver (1410) kommunikativ gekoppelt ist; und
    mindestens einen Speicher (1420), der mit dem mindestens einen Prozessor (1430) kommunikativ gekoppelt ist und in dem Anweisungen gespeichert sind, die von dem mindestens einen Prozessor (1430) einzeln oder in beliebiger Kombination ausgeführt werden können, um das UE dazu zu veranlassen,
    ein Downlink-Signal auf der Grundlage eines oder mehrerer Downlink-Kanäle zu empfangen,
    eine Priorität einer oder mehrerer Uplink-Steuerinformationen (kurz: UCI) zu identifizieren und
    ein Uplink-Signal, das die eine oder die mehreren UCI enthält, auf der Grundlage eines oder mehrerer Uplink-Kanäle zu senden,
    wobei der eine oder die mehreren Uplink-Kanäle einen physikalischen Uplink-Steuerkanal (kurz: PUCCH) mit Wiederholungen umfassen und der PUCCH mit Wiederholungen auf der Grundlage der identifizierten Priorität der einen oder der mehreren UCI gesendet wird, und
    wobei die Priorität der einen oder der mehreren UCI identifiziert wird als: hybride automatische Wiederholungsanforderungs-Bestätigung (kurz: HARQ-ACK), angegeben durch ein Downlink-Steuerungsinformationsformat (kurz: DCI-Format), HARQ-ACK, nicht angegeben durch das DCI-Format, positive Scheduling-Anforderung (kurz: SR), Kanalzustandsinformation (kurz: CSI) mit einer ersten Priorität, CSI mit einer zweiten Priorität und negative SR, in einer Reihenfolge von höherer Priorität zu niedrigerer Priorität.

6. UE nach Anspruch 5,
wobei die erste Priorität höher ist als die zweite Priorität.

7. UE nach Anspruch 5, wobei die Anweisungen das UE ferner dazu veranlassen,

Kollisionen zwischen PUCCHs mit Wiederholungen aus dem einen oder den mehreren Uplink-Kanälen und einem ersten vordefinierten Symbol aufzulösen und Kollisionen zwischen physikalischen Uplink-Shared-Kanälen (kurz: PUSCHs) aus dem einen oder den mehreren Uplink-Kanälen und dem ersten vordefinierten Symbol aufzulösen;
die PUCCHs und die PUSCHs aus dem einen oder den mehreren Uplink-Kanälen zu multiplexen und zu priorisieren; oder
Kollisionen zwischen den PUCCHs und den PUSCHs aus dem einen oder den mehreren Uplink-Kanälen und einem zweiten vordefinierten Symbol aufzulösen.

8. UE nach Anspruch 5, wobei die Anweisungen das UE ferner dazu veranlassen,

Kollisionen zwischen PUCCHs mit Wiederholungen aus dem einen oder den mehreren Uplink-Kanälen und einem ersten vordefinierten Symbol aufzulösen, und Kollisionen zwischen PUSCHs aus dem einen oder den mehreren Uplink-Kanälen und dem ersten vordefinierten Symbol aufzulösen, und Kollisionen zwischen physikalischen Downlink-Shared-Kanälen (kurz: PDSCHs) aus dem einen oder den mehreren Downlink-Kanälen und einem dritten vordefinierten Symbol aufzulösen;
die PUCCHs und die PUSCHs aus dem einen oder den mehreren Uplink-Kanälen zu multiplexen und zu priorisieren;
Kollisionen zwischen dynamisch geplanten PDSCHs aus dem einen oder den mehreren Downlink-Kanälen und semi-persistent geplanten PDSCHs (kurz: SPS PDSCHs) aus dem einen oder den mehreren Downlink-Kanälen aufzulösen;
Kollisionen zwischen den PDSCHs aus dem einen oder den mehreren Downlink-Kanälen und den PUCCHs und den PUSCHs aus dem einen oder den mehreren Uplink-Kanälen aufzulösen; oder
Kollisionen zwischen den PUCCHs aus dem einen oder den mehreren Uplink-Kanälen und einem zweiten vordefinierten Symbol aufzulösen und Kollisionen zwischen den PUSCHs aus dem einen oder den mehreren Uplink-Kanälen und dem zweiten vordefinierten Symbol aufzulösen.

9. Verfahren, das von einer Basisstation durchgeführt wird, wobei das Verfahren Folgendes umfasst:

Senden eines Downlink-Signals basierend auf einem oder mehreren Downlink-Kanälen; und
Empfangen eines Uplink-Signals, das eine oder mehrere Uplink-Steuerinformationen (kurz: UCI) enthält, basierend auf einem oder mehreren Uplink-Kanälen,
Identifizieren einer Priorität der einen oder mehreren UCI,
wobei der eine oder die mehreren Uplink-Kanäle einen physikalischen Uplink-Steuerkanal (kurz: PUCCH) mit Wiederholungen umfassen und der PUCCH mit Wiederholungen basierend auf der identifizierten Priorität der einen oder der mehreren UCI empfangen wird, und
wobei die Priorität der einen oder der mehreren UCI identifiziert wird als:
hybride automatische Wiederholungsanforderungs-Bestätigung (kurz: HARQ-ACK), angegeben durch ein Downlink-Steuerungsinformationsformat (kurz: DCI-Format), HARQ-ACK, nicht angegeben durch das DCI-Format, positive Scheduling-Anforderung (kurz: SR), Kanalzustandsinformation (kurz: CSI) mit einer ersten Priorität, CSI mit einer zweiten Priorität und negative SR, in einer Reihenfolge von höherer Priorität zu niedrigerer Priorität.

10. Verfahren nach Anspruch 9,
wobei die erste Priorität höher ist als die zweite Priorität.

11. Verfahren nach Anspruch 9, wobei das Empfangen des Uplink-Signals basierend auf dem einen oder den mehreren Uplink-Kanälen und das Senden des Downlink-Signals basierend auf dem einen oder den mehreren Downlink-Kanälen mindestens eines von Folgendem umfasst:

Auflösen von Kollisionen zwischen PUCCHs mit Wiederholungen und physikalischen Uplink-Shared-Kanälen (kurz: PUSCHs) aus dem einen oder den mehreren Uplink-Kanälen und einem ersten vordefinierten Symbol;
Auflösen von Kollisionen zwischen physikalischen Downlink-Shared-Kanälen (kurz: PDSCHs) aus dem einen oder den mehreren Downlink-Kanälen und einem dritten vordefinierten Symbol und
Auflösen von Kollisionen zwischen den PUCCHs und den PUSCHs aus dem einen oder den mehreren Uplink-Kanälen und den PDSCHs aus dem einen oder den mehreren Downlink-Kanälen.

12. Basisstation, umfassend:

mindestens einen Transceiver (1510);
mindestens einen Prozessor (1530), der mit dem mindestens einen Transceiver (1510) kommunikativ gekoppelt ist; und
mindestens einen Speicher, der mit dem mindestens einen Prozessor (1530) kommunikativ gekoppelt ist und in dem Anweisungen gespeichert sind, die von dem mindestens einen Prozessor (1530) einzeln oder in beliebiger Kombination ausgeführt werden können, um die Basisstation dazu zu veranlassen,
ein Downlink-Signal auf der Grundlage eines oder mehrerer Downlink-Kanäle zu senden und
ein Uplink-Signal, das eine oder mehrere Uplink-Steuerinformationen (kurz: UCI) enthält, auf der Grundlage eines oder mehrerer Uplink-Kanäle zu empfangen,
eine Priorität der einen oder der mehreren UCI zu identifizieren,
wobei der eine oder die mehreren Uplink-Kanäle einen physikalischen Uplink-Steuerkanal (kurz: PUCCH) mit Wiederholungen umfassen und der PUCCH mit Wiederholungen auf der Grundlage der identifizierten Priorität der einen oder der mehreren UCI empfangen wird, und
wobei die Priorität der einen oder der mehreren UCI identifiziert wird als:
hybride automatische Wiederholungsanforderungs-Bestätigung (kurz: HARQ-ACK), angegeben durch ein Downlink-Steuerungsinformationsformat (kurz: DCI-Format), HARQ-ACK, nicht angegeben durch das DCI-Format, positive Scheduling-Anforderung (kurz: SR), Kanalzustandsinformation (kurz: CSI) mit einer ersten Priorität, CSI mit einer zweiten Priorität und negative SR, in einer Reihenfolge von höherer Priorität zu niedrigerer Priorität.

13. Basisstation nach Anspruch 12,
wobei die erste Priorität höher ist als die zweite Priorität.

14. Basisstation nach Anspruch 12, wobei die Anweisungen das UE ferner dazu veranlassen,

Kollisionen zwischen PUCCHs mit Wiederholungen und physikalischen Uplink-Shared-Kanälen (kurz: PUSCHs) aus dem einen oder den mehreren Uplink-Kanälen und einem ersten vordefinierten Symbol aufzulösen;
Kollisionen zwischen physikalischen Downlink-Shared-Kanälen (kurz:PDSCHs) aus dem einen oder den mehreren Downlink-Kanälen und einem dritten vordefinierten Symbol aufzulösen; oder
Kollisionen zwischen den PUCCHs und den PUSCHs aus dem einen oder den mehreren Uplink-Kanälen und den PDSCHs aus dem einen oder den mehreren Downlink-Kanälen aufzulösen.

**Revendications**

1. Procédé (1000) exécuté par un équipement utilisateur, UE, le procédé (1000) comprenant :

recevoir (S1010) un signal de liaison descendante sur la base d'un ou plusieurs canaux de liaison descendante ;
identifier une priorité d'une ou plusieurs informations de commande de liaison montante, UCI ; et
émettre (S1010) un signal de liaison montante contenant l'une ou plusieurs UCI sur la base d'un ou plusieurs canaux de liaison montante,
dans lequel l'un ou plusieurs canaux de liaison montante contiennent un canal de commande physique de liaison montante, PUCCH, avec répétitions, et le PUCCH avec répétitions est émis sur la base de la priorité identifiée de l'une ou plusieurs UCI, et
dans lequel la priorité de l'une ou plusieurs UCI est identifiée comme : un accusé de réception d'une demande de répétition automatique hybride, HARQ-ACK, indiqué par un format d'information de commande de liaison descendante, DCI, un HARQ-ACK non indiqué par le format DCI, une demande de planification positive, SR, une information d'état de canal, CSI, avec une première priorité, une CSI avec une seconde priorité, et une SR négative, dans un ordre de priorité décroissante.

2. Procédé selon la revendication 1,
   dans lequel la première priorité est supérieure à la seconde priorité.

3. Procédé selon la revendication 1,
   dans lequel l'émission du signal de liaison montante sur la base de l'un ou plusieurs canaux de liaison montante comprend au moins une des opérations suivantes :

   résoudre des collisions entre des PUCCH avec répétitions provenant de l'un ou plusieurs canaux de liaison montante et un premier symbole prédéfini, et résoudre des collisions entre des canaux partagés physiques de liaison montante, PUSCH, provenant de l'un ou plusieurs canaux de liaison montante et le premier symbole prédéfini,
   effectuer un multiplexage et attribuer une priorité aux PUCCH et aux PUSCH provenant de l'un ou plusieurs canaux de liaison montante, ou
   résoudre des collisions entre les PUCCH et les PUSCH provenant de l'un ou plusieurs canaux de liaison montante et un deuxième symbole prédéfini,
   dans lequel le premier symbole prédéfini ou le deuxième symbole prédéfini contient au moins un des suivantes :

   un symbole de liaison descendant configuré par signalisation de couche supérieure ;
   un symbole d'un bloc de signal de synchronisation, SSB, et d'un canal de diffusion physique, PBCH ;
   un symbole d'un ensemble de ressources de commande pour une planification de bloc d'information systématique 1, SIB1 ;
   un symbole indisponible configuré par signalisation de couche supérieure ;
   Y symboles après un SSB, où Y est un entier ; ou
   un symbole de liaison descendante et un symbole flexible indiqués par un format DCI.

4. Procédé selon la revendication 1,

   dans lequel l'émission du signal de liaison montante est sur la base d'un ou plusieurs canaux de liaison montante, et
   dans lequel la réception du signal de liaison descendante sur la base de l'un ou plusieurs canaux de liaison descendante comprend au moins une des opérations suivantes :

   résoudre des collisions entre des PUCCH avec répétitions provenant de l'un ou plusieurs canaux de liaison montante et un premier symbole prédéfini, et résoudre des collisions entre des PUSCH provenant de l'un ou plusieurs canaux de liaison montante et le premier symbole prédéfini, et résoudre des collisions entre des canaux partagés physiques de liaison descendante, PDSCH, provenant de l'un ou plusieurs canaux de liaison descendante et un troisième symbole prédéfini,
   effectuer un multiplexage et attribuer une priorité aux PUCCH et aux PUSCH provenant de l'un ou plusieurs canaux de liaison montante,
   résoudre des collisions entre des PDSCH dynamiquement planifiés provenant de l'un ou plusieurs canaux de liaison descendante et des PDSCH de planification semi-persistante, SPS, provenant de l'un ou plusieurs canaux de liaison descendante,
   résoudre des collisions entre les PDSCH provenant de l'un ou plusieurs canaux de liaison descendante et les PUCCH et les PUSCH provenant de l'un ou plusieurs canaux de liaison montante, ou
   résoudre des collisions entre les PUCCH provenant de l'un ou plusieurs canaux de liaison montante et un deuxième symbole prédéfini, et résoudre des collisions entre les PUSCH provenant de l'un ou plusieurs canaux de liaison montante et le deuxième symbole prédéfini,
   dans lequel le troisième symbole prédéfini comprend au moins un parmi les suivants :

   un symbole de liaison montante configuré par signalisation de couche supérieure ;
   un symbole flexible configuré par signalisation de couche supérieure ;
   un symbole de liaison montante indiqué par un format DCI ; ou
   un symbole flexible indiqué par un format DCI.

5. Équipement utilisateur, UE, comprenant :

au moins un émetteur-récepteur (1410) ;
au moins un processeur (1430) couplé par communication à l'au moins un émetteur-récepteur (1410) ; et
au moins une mémoire (1420), couplée par communication à l'au moins un processeur (1430), et stockant des instructions exécutables par l'au moins un processeur (1430) individuellement ou en toute combinaison pour amener l'UE à :

recevoir un signal de liaison descendante sur la base d'un ou plusieurs canaux de liaison descendante, identifier une priorité d'une ou plusieurs informations de commande de liaison montante, UCI, et émettre un signal de liaison montante contenant l'une ou plusieurs UCI sur la base d'un ou plusieurs canaux de liaison montante,
dans lequel l'un ou plusieurs canaux de liaison montante contiennent un canal de commande physique de liaison montante, PUCCH, avec répétitions, et le PUCCH avec répétitions est émis sur la base de la priorité identifiée de l'une ou plusieurs UCI, et
dans lequel la priorité de l'une ou plusieurs UCI est identifiée comme : un accusé de réception d'une demande de répétition automatique hybride, HARQ-ACK, indiqué par un format d'information de commande de liaison descendante, DCI, un HARQ-ACK non indiqué par le format DCI, une demande de planification positive, SR, une information d'état de canal, CSI, avec une première priorité, une CSI avec une seconde priorité, et une SR négative, dans un ordre de priorité décroissante.

6. UE selon la revendication 5,
dans lequel la première priorité est supérieure à la seconde priorité,

7. UE selon la revendication 5, dans lequel les instructions amènent en outre l'UE à :

résoudre des collisions entre des PUCCH avec répétitions provenant de l'un ou plusieurs canaux de liaison montante et un premier symbole prédéfini, et résoudre des collisions entre des canaux partagés physiques de liaison montante, PUSCH, provenant de l'un ou plusieurs canaux de liaison montante et le premier symbole prédéfini ;
effectuer un multiplexage et attribuer une priorité aux PUCCH et aux PUSCH provenant de l'un ou plusieurs canaux de liaison montante ; ou
résoudre des collisions entre les PUCCH et les PUSCH provenant de l'un ou plusieurs canaux de liaison montante et un deuxième symbole prédéfini.

8. UE selon la revendication 5, dans lequel les instructions amènent en outre l'UE à :

résoudre des collisions entre des PUCCH avec répétitions provenant de l'un ou plusieurs canaux de liaison montante et un premier symbole prédéfini, et résoudre des collisions entre des PUSCH provenant de l'un ou plusieurs canaux de liaison montante et le premier symbole prédéfini, et résoudre des collisions entre des canaux partagés physiques de liaison descendante, PDSCH, provenant de l'un ou plusieurs canaux de liaison descendante et un troisième symbole prédéfini ;
effectuer un multiplexage et attribuer une priorité aux PUCCH et aux PUSCH provenant de l'un ou plusieurs canaux de liaison montante ;
résoudre des collisions entre des PDSCH dynamiquement planifiés provenant de l'un ou plusieurs canaux de liaison descendante et des PDSCH de planification semi-persistante, SPS, provenant de l'un ou plusieurs canaux de liaison descendante ;
résoudre des collisions entre les PDSCH provenant de l'un ou plusieurs canaux de liaison descendante et les PUCCH et les PUSCH provenant de l'un ou plusieurs canaux de liaison montante ; ou
résoudre des collisions entre les PUCCH provenant de l'un ou plusieurs canaux de liaison montante et un deuxième symbole prédéfini, et résoudre des collisions entre les PUSCH provenant de l'un ou plusieurs canaux de liaison montante et le deuxième symbole prédéfini.

9. Procédé exécuté par une station de base, le procédé comprenant :

émettre un signal de liaison descendante sur la base d'un ou plusieurs canaux de liaison descendante ; et
recevoir un signal de liaison montante contenant une ou plusieurs informations de commande de liaison montante, UCI, sur la base d'un ou plusieurs canaux de liaison montante,
identifier une priorité de l'une ou plusieurs UCI,
dans lequel l'un ou plusieurs canaux de liaison montante contiennent un canal de commande physique de liaison montante, PUCCH, avec répétitions, et le PUCCH avec répétitions est reçu sur la base de la priorité identifiée de l'une ou plusieurs UCI, et

dans lequel la priorité de l'une ou plusieurs UCI est identifiée comme :

un accusé de réception d'une demande de répétition automatique hybride, HARQ-ACK, indiqué par un format d'information de commande de liaison descendante, DCI, un HARQ-ACK non indiqué par le format DCI, une demande de planification positive, SR, une information d'état de canal, CSI, avec une première priorité, une CSI avec une seconde priorité, et une SR négative, dans un ordre de priorité décroissante.

10. Procédé selon la revendication 9,
dans lequel la première priorité est supérieure à la seconde priorité.

11. Procédé selon la revendication 9, dans lequel la réception du signal de liaison montante est sur la base de l'un ou plusieurs canaux de liaison montante, et l'émission du signal de liaison descendante sur la base de l'un ou plusieurs canaux de liaison descendante comprend au moins une des opérations suivantes :

résoudre des collisions entre des PUCCH avec répétitions et des canaux partagés physiques de liaison montante, PUSCH, provenant de l'un ou plusieurs canaux de liaison montante et un premier symbole prédéfini ;
résoudre des collisions entre des canaux partagés physiques de liaison descendante, PDSCH, provenant de l'un ou plusieurs canaux de liaison descendante et un troisième symbole prédéfini ; ou
résoudre des collisions entre les PUCCH et les PUSCH provenant de l'un ou plusieurs canaux de liaison montante et les PDSCH provenant de l'un ou plusieurs canaux de liaison descendante.

12. Station de base, comprenant :

au moins un émetteur-récepteur (1510) ;
au moins un processeur (1530) couplé par communication à l'au moins un émetteur-récepteur (1510) ; et
au moins une mémoire, couplée par communication à l'au moins un processeur (1530), et stockant des instructions exécutables par l'au moins un processeur (1530) individuellement ou en toute combinaison pour amener la base de station à :

émettre un signal de liaison descendante sur la base d'un ou plusieurs canaux de liaison descendante, et recevoir un signal de liaison montante contenant une ou plusieurs informations de commande de liaison montante, UCI, sur la base d'un ou plusieurs canaux de liaison montante,
identifier une priorité de l'une ou plusieurs UCI,
dans lequel l'un ou plusieurs canaux de liaison montante contiennent un canal de commande physique de liaison montante, PUCCH, avec répétitions, et le PUCCH avec répétitions est reçu sur la base de la priorité identifiée de l'une ou plusieurs UCI, et
dans lequel la priorité de l'une ou plusieurs UCI est identifiée comme :
un accusé de réception d'une demande de répétition automatique hybride, HARQ-ACK, indiqué par un format d'information de commande de liaison descendante, DCI, un HARQ-ACK non indiqué par le format DCI, une demande de planification positive, SR, une information d'état de canal, CSI, avec une première priorité, une CSI avec une seconde priorité, et une SR négative, dans un ordre de priorité décroissante.

13. Station de base selon la revendication 12,
dans lequel la première priorité est supérieure à la seconde priorité.

14. Station de base selon la revendication 12, dans lequel les instructions amènent en outre l'UE à :

résoudre des collisions entre des PUCCH avec répétitions et des canaux partagés physiques de liaison montante, PUSCH, provenant de l'un ou plusieurs canaux de liaison montante et un premier symbole prédéfini ;
résoudre des collisions entre des canaux partagés physiques de liaison descendante, PDSCH, provenant de l'un ou plusieurs canaux de liaison descendante et un troisième symbole prédéfini ; ou
résoudre des collisions entre les PUCCH et les PUSCH provenant de l'un ou plusieurs canaux de liaison montante et les PDSCH provenant de l'un ou plusieurs canaux de liaison descendante.

[Fig. 1]

[Fig. 2A]

```
                                                                              ⌐200

        ⌐205         ⌐210        ⌐215        ⌐220        ⌐225        ⌐230

Data    ┌─────────┐  ┌───────┐  ┌───────┐  ┌───────┐  ┌───────┐  ┌───────┐  To
Input   │ Channel │  │       │  │       │  │       │  │  Add  │  │       │  Channel
──────▶ │Coding & │─▶│ S-to-P│─▶│Size N │─▶│ P-to-S│─▶│Cyclic │─▶│  UC   │──────▶
        │Modulation│  │       │  │ IFFT  │  │       │  │Prefix │  │       │
        └─────────┘  └───────┘  └───────┘  └───────┘  └───────┘  └───────┘
```

37

[Fig. 2B]

EP 4 454 389 B1

[Fig. 3A]

116

39

[Fig. 3B]

102

370a  372a   370b   372b   370n   372n

| RF TRANSCEIVER | RF TRANSCEIVER | · · · | RF TRANSCEIVER |

TX PROCESSING CIRCUIT    RX PROCESSING CIRCUIT

374    376

CONTROLLER/ PROCESSOR    378

382

BACKHAUL/ NETWORK IF

MEMORY    380

[Fig. 4]

| TRANSCEVIER 401 | CONTROLLER 402 |

SECOND TRANSCEIVING NODE
400

[Fig. 5]

[Fig. 6A]

[Fig. 6B]

[Fig. 6C]

[Fig. 7A]

| row index | dmrs-TypeA-Position | PDSCH mapping type | $K_0$ | S | L |
|---|---|---|---|---|---|
| 1 | 2 | Type A | 0 | 2 | **12** |
|   | 3 | Type A | 0 | 3 | 11 |
| 2 | 2 | Type A | 0 | 2 | 10 |
|   | 3 | Type A | 0 | 3 | 9 |
| 3 | 2 | Type A | 0 | 2 | 9 |
|   | 3 | Type A | 0 | 3 | 8 |
| 4 | 2 | Type A | 0 | 2 | 7 |
|   | 3 | Type A | 0 | 3 | 6 |
| 5 | 2 | Type A | 0 | 2 | 5 |
|   | 3 | Type A | 0 | 3 | 4 |
| 6 | 2 | Type B | 0 | 9 | 4 |
|   | 3 | Type B | 0 | 10 | 4 |
| 7 | 2 | Type B | 0 | 4 | 4 |
|   | 3 | Type B | 0 | 6 | 4 |
| 8 | 2,3 | Type B | 0 | 5 | 7 |
| 9 | 2,3 | Type B | 0 | 5 | 2 |
| 10 | 2,3 | Type B | 0 | 9 | 2 |
| 11 | 2,3 | Type B | 0 | 12 | 2 |
| 12 | 2,3 | Type A | 0 | 1 | 13 |
| 13 | 2,3 | Type A | 0 | 1 | 6 |
| 14 | 2,3 | Type A | 0 | 2 | 4 |
| 15 | 2,3 | Type B | 0 | 4 | 7 |
| 16 | 2,3 | Type B | 0 | 8 | 4 |

[Fig. 7B]

| row index | $\{K_0, S, L\}$ set |
|---|---|
| 1 | {0,0,7}, {1,2,7}, {2,4,4} |
| 2 | {1,3,4}, {3,5,7} |
| 3 | {0,0,7}, {3,7,7} |

[Fig. 8]

| Slot | 0 | 1 | 2 | 3 | 4 | 5 | 6 | 7 | 8 |
|---|---|---|---|---|---|---|---|---|---|
|  | HARQ-ACK#1 | HARQ-ACK#2 | HARQ-ACK#3 | HARQ-ACK#4 | | | | | |

[Fig. 9]

| Slot | 0 | 1 | 2 | 3 | 4 | 5 | 6 | 7 | 8 |
|------|---|---|---|---|---|---|---|---|---|
| | PUCCH#1 | PUCCH#2 | PUCCH#3 | PUCCH#4 | | | | | |

[Fig. 10]

```
            ( Start )                      1000

                |
                ↓                        ⌐S1010
 ┌─────────────────────────────────────────────┐
 │  Receive a downlink signal based on one or   │
 │  more downlink channels, and/or transmit an  │
 │  uplink signal based on one or more uplink   │
 │              channels                        │
 └─────────────────────────────────────────────┘
                |
                ↓
            (  End  )
```

[Fig. 11]

```
 ┌───────────────────────────────────────────┐
 │                                             │
 │   ┌──────────────┐   ┌──────────────┐       │
 │   │  Transcevier │   │  Controller  │       │
 │   │     1101     │   │     1102     │       │
 │   └──────────────┘   └──────────────┘       │
 │                                             │
 │          First Transceiving Node            │
 │                   1100                      │
 └───────────────────────────────────────────┘
```

[Fig. 12]

```
                                     1200
            ( Start )

                |
                ↓                        ⌐S1210
 ┌─────────────────────────────────────────────┐
 │ Transmit downlink data and/or downlink       │
 │ control signaling                            │
 └─────────────────────────────────────────────┘
                |
                ↓                        ⌐S1220
 ┌─────────────────────────────────────────────┐
 │ Receive second type of data and/or second    │
 │ type of control signaling from a UE in a     │
 │ time unit                                    │
 └─────────────────────────────────────────────┘
                |
                ↓
            (  End  )
```

[Fig. 13]

[Fig. 14]

[Fig. 15]

**REFERENCES CITED IN THE DESCRIPTION**

**Non-patent literature cited in the description**

- **HUAWEI et al.** Intra-UE multiplexing enhancements. *3GPP DRAFT; R1-2200960, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE*, 14 February 2022, vol. RAN WG1 (e-Meeting)

- **NOKIA et al.** On UL intra-UE multiplexing and prioritization enhancements. *3GPP DRAFT; R1-2201018, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE*, 11 February 2022, vol. RAN WG1 (e-Meeting)